Europäisches Patentamt

European Patent Office

Office européen des brevets

(19)

(11) **EP 0 842 846 B1**

(12) **FASCICULE DE BREVET EUROPEEN**

(45) Date de publication et mention
de la délivrance du brevet:
**28.08.2002 Bulletin 2002/35**

(51) Int Cl.$^7$: **B64C 27/46**, B64C 27/467

(21) Numéro de dépôt: **97402633.8**

(22) Date de dépôt: **05.11.1997**

(54) **Pale à extrémité en flèche pour voilure tournante d'aéronef**

Rotorblatt eines Drehflügelflugzeuges mit Pfeilblattspitze

Rotorcraft rotor blade with sweepback tip

(84) Etats contractants désignés:
**DE GB IT**

(30) Priorité: **19.11.1996 FR 9614066**

(43) Date de publication de la demande:
**20.05.1998 Bulletin 1998/21**

(73) Titulaires:
- **EUROCOPTER
13725 Marignane Cédex (FR)**
- **OFFICE NATIONAL D'ETUDES ET DE
RECHERCHES AEROSPATIALES (ONERA)
92320 Chatillon sous Bagneux (FR)**

(72) Inventeurs:
- **Toulmay, François Valentin Gaston
13137 Vitrolles (FR)**
- **Zibi, Joelle Marguerite
75015 Paris (FR)**

(74) Mandataire: **Bonnetat, Christian
CABINET BONNETAT
29, rue de St. Pétersbourg
75008 Paris (FR)**

(56) Documents cités:
FR-A- 2 617 118          FR-A- 2 636 593
FR-A- 2 689 852          US-A- 3 066 742

**Description**

La présente invention concerne une pale pour voilure tournante d'aéronef, à extrémité en flèche, optimisée pour le vol à grande vitesse.

On sait que, aussi bien en vol stationnaire qu'en vol d'avancement, les performances d'un rotor d'aéronef à voilure tournante, notamment un hélicoptère, sont limitées par les phénomènes suivants :

- les ondes de choc qui se développent à l'extrados et à l'intrados des pales en position avançante lors du vol à grande vitesse ;
- le décrochage résultant du décollement de la couche limite à l'extrados des pales en position reculante, lors d'une demande de portance en vol de translation ;
- l'interaction du tourbillon engendré par la pale précédente avec la pale suivante, ce qui entraîne une dissipation importante d'énergie en vol stationnaire sous deux formes : puissance induite et puissance de traînée des profils.

Outre les pertes de performances, les chocs et l'interaction pale-tourbillon sont également responsables de nuisances sonores sous forme de bruits impulsifs, respectivement par délocalisation des chocs (vol à grande vitesse) et par modulation impulsive de la portance lorsque le tourbillon marginal frappe directement la pale (descente).

On a trouvé que les performances d'une pale pour voilure tournante d'aéronef dépendaient, dans une large mesure, de paramètres liés à la construction de la pale, tels que :

a) la répartition radiale de la surface de la pale ;
b) la mise en flèche de la partie d'extrémité libre de la pale ;
c) l'évolution de l'épaisseur relative des profils ;
d) la répartition du vrillage des profils ;
e) la mise en dièdre de la partie d'extrémité libre de la pale.

L'influence de ces paramètres sur les performances d'une pale de voilure tournante est étudiée en détail ci-après.

a) <u>Répartition radiale de la surface de la pale.</u>

Pour un rotor d'aéronef à voilure tournante dont les profils ou sections élémentaires travaillent tous au même coefficient de portance Cz, la portance linéique varie comme la longueur de corde locale L(r) et comme le carré de la vitesse locale, laquelle est directement proportionnelle au rayon (position radiale) $\underline{r}$ de la section. Il en résulte que la portance totale de la pale varie proportionnellement à la corde moyenne $\bar{L}$, définie par une pondération en carré du rayon $\underline{r}$ :

$$\bar{L} \;=\; \frac{\displaystyle\int_{RO}^{R} L(r)\; r^2\; dr}{\displaystyle\int_{RO}^{R} r^2\; dr}$$

dans laquelle RO représente le rayon $\underline{r}$ à l'origine de la partie empennée de la pale, et R le rayon total de la pale.

Il est d'usage courant de comparer les performances des pales de différentes formes en les rapportant à cette corde moyenne $\bar{L}$.

Par rapport à une pale classique de forme rectangulaire, les calculs montrent, et l'expérience le confirme, qu'une réduction de la corde à l'extrémité externe de la pale (forme effilée) améliore les performances, en particulier à grande vitesse. Cette amélioration des performances s'applique par la réduction de traînée des profils due à la réduction de la corde en extrémité. Les chocs situés dans cette zone s'exercent sur une surface plus faible, tandis que la partie centrale de la pale, non soumise aux chocs, assure alors l'essentiel de la portance avec une finesse maximale : le quotient portance/traînée y est maximal.

L'augmentation de la corde sur le reste de l'envergure de la pale, nécessaire pour maintenir la corde moyenne constante, est cependant importante du fait de la pondération en $r^2$. Il en résulte un alourdissement important du rotor.

Néanmoins, l'effilement vers l'extérieur de la pale est un moyen couramment utilisé pour améliorer les performances de celle-ci, en général en combinaison avec une mise en flèche de l'extrémité de la pale, comme l'illustrent les brevets FR-2 617 118 et FR-2 473 983.

Par ailleurs, le brevet FR-2 311 713 propose une construction très différente, qui consiste, entre autres particularités, à élargir la corde, de façon brutale, au-delà d'une section située à environ 87% du rayon total de la pale R. Cette disposition contribue à l'apparition de tourbillons intenses et stables qui repoussent la limite de décrochage, en particulier lorsque la pale est en position reculante. Cependant, ce concept qui concentre la surface de pale vers son extrémité revient à réduire la partie efficace du rotor à un anneau périphérique. Cela rend le flux induit moins homogène et, par conséquent, la puissance induite augmente, ce qui est particulièrement néfaste au décollage.

Les variations brutales de la corde et les inconvénients associés sont évités dans le concept de pale objet du brevet FR-2 689 852 de la demanderesse. La zone de corde maximale y reste proche de l'extrémité, toujours dans le but d'augmenter la capacité de portance. Cependant, ce concept n'est pas idéal pour le vol à grande vitesse à portance moyenne car, dans ces conditions, les sections à grande corde, proches de l'extrémité, ont leur traînée augmentée du fait des phénomènes de compressibilité, alors que la zone de meilleure finesse (rapport portance/traînée) se situe à une plus grande distance de l'extrémité. Une fraction trop faible de la surface de la pale exploite cette zone centrale de la pale où la finesse aérodynamique se trouve maximale.

b) Mise en flèche de la partie d'extrémité libre de la pale.

De plus, afin de reculer le seuil d'apparition des ondes de chocs et de limiter leur intensité, il est avantageux de courber l'extrémité libre de la pale vers l'arrière. L'angle de flèche $\Lambda$, défini par la ligne des foyers aérodynamiques (environ au quart avant de la corde) et l'axe de variation de pas, réduit le nombre de Mach effectif et, ainsi, la mise en flèche de l'extrémité libre de la pale constitue un moyen efficace pour diminuer les conséquences défavorables de la compressibilité de l'air, notamment l'apparition d'ondes de choc.

Une telle mise en flèche de l'extrémité de la pale est illustrée notamment par les brevets FR-2 311 713, FR-2 473 983 et FR-2 617 118, et est effectivement utilisée sur certains hélicoptères.

Cependant, l'amplitude de l'angle de flèche et l'étendue en envergure de la zone d'extrémité concernée sont en fait limitées par les efforts de torsion qui résultent du déport vers l'arrière de la portance aérodynamique, ainsi que du centre de gravité.

Dans le brevet FR-2 311 713, on propose de déporter vers l'avant une partie de la pale de façon à équilibrer le déport vers l'arrière de son extrémité. Cela permet d'étendre la zone en flèche sur une partie plus importante de l'envergure. Toutefois, le raccordement de la portion du bord d'attaque en déport vers l'avant avec la partie interne de la pale s'effectue de façon brutale, et le tourbillon engendré par ce raccordement provoque le décrochage prématuré des profils plus proches du moyeu du rotor. A grande vitesse, la forme concave du bord d'attaque au niveau du raccordement focalise et renforce localement les ondes de choc, ce qui risque de réduire, voire d'annuler, les effets bénéfiques de la mise en flèche.

Dans le brevet FR-2 397 328, on préconise également le déport vers l'avant du bord d'attaque, mais dans un but différent. Il ne s'agit pas ici de réduire les efforts de torsion, mais de provoquer une déformation élastique de la pale, de façon contrôlée et que l'on suppose favorable.

Cependant, l'effet de l'angle de flèche peut devenir défavorable à grande vitesse si cet angle excède une valeur de 45° environ. Si l'angle est trop important, l'écoulement de l'air s'effectue de façon quasiment parallèle au bord d'attaque lorsque la pale se trouve en mouvement reculant et dans le secteur arrière du disque du rotor en vol de translation rapide : cela réduit temporairement la portance aérodynamique de l'extrémité et augmente sa traînée, d'où une perte d'efficacité globale. Ce problème peut affecter la pale en flèche objet du brevet FR-2 689 852 notamment.

c) Evolution de l'épaisseur relative des profils.

L'épaisseur relative d'une section droite de pale est définie comme le rapport de l'épaisseur absolue à la longueur de corde du profil qui constitue le contour de cette section, soit e/L.

Les pales usuelles ayant une longueur de corde constante sur la plus grande partie de l'envergure utilisent généralement, du côté de l'emplanture, des profils d'épaisseur relative comprise entre 10 et 14%, ce qui leur assure une rigidité de torsion suffisante, mais avec des performances insuffisantes à grande vitesse.

Dans le brevet FR-2 689 852 par exemple, la réduction de la corde vers l'emplanture est susceptible d'améliorer les performances à grande vitesse car la finesse n'est pas bonne en pied de pale, du fait des très grandes variations de l'incidence aérodynamique et de l'attaque par le bord de fuite que subissent les profils à l'intérieur de la zone appelée "cercle d'inversion". Cependant, la réduction de corde diminue dangereusement la rigidité de la pale, et les déformations de torsion, également favorisées par le déport de l'extrémité par rapport à l'axe de variation de pas, prennent une amplitude telle que les performances se dégradent ou bien ne s'améliorent pas autant que souhaité.

d) Répartition du vrillage des profils.

Outre la répartition radiale de la longueur de corde et la mise en flèche de l'extrémité, la répartition du vrillage des sections élémentaires d'une pale intervient également dans l'amélioration des performances de cette dernière. Le vrillage d'une pale consiste à faire varier le calage des profils le long de l'envergure de la pale, de sorte que l'extrémité externe de la pale attaque l'air sous une incidence relativement faible, et le pied de pale sous une incidence plus forte. Cela permet de répartir la portance de façon plus uniforme sur toute la surface du rotor et de réduire ainsi la puissance absorbée en vol stationnaire.

Le vrillage est donc caractérisé par la différence de calage entre les deux extrémités de la pale. Cependant, on sait qu'un fort vrillage peut amener l'extrémité externe de la pale à porter négativement (vers le bas) en position avançante lorsque l'aéronef à voilure tournante se déplace à grande vitesse. Les performances s'en trouvent dégradées et, surtout, les vibrations augmentent fortement.

Le choix du vrillage résulte donc d'un compromis entre, d'une part, le vol stationnaire et les basses vitesses qui exigent un fort vrillage et, d'autre part, le vol d'avancement pour lequel un vrillage plus modéré est souhaitable.

Par souci de simplicité, la répartition radiale du vrillage est souvent linéaire, de sorte que le vrillage total suffit à définir le calage de toutes les sections élémentaires.

Toutefois, afin d'améliorer les performances, dans le brevet FR-2 636 593, on propose de réaliser un vrillage non linéaire consistant à survriller l'extrémité externe de la pale, par exemple entre 85 et 100% du rayon total de la pale R. Cela a pour effet de réduire l'intensité du tourbillon marginal, voire d'annuler celui-ci, pour un niveau de portance donné, de sorte que les performances à basse vitesse sont améliorées et que les bruits d'interaction pale/tourbillon en descente sont atténués. Cependant, cette disposition ne permet pas de repousser les limites de décrochage, et les gains en puissance décroissent à grande vitesse.

Dans le brevet FR-2 689 852, on propose d'augmenter fortement le taux de vrillage dans une zone centrale comprise sensiblement entre 45 et 80% de l'envergure. Une telle modification, qui vise à améliorer la capacité de portance, ne serait pas optimale pour un rotor dont l'objectif serait d'augmenter l'efficacité à grande vitesse.

e) Mise en dièdre de la partie d'extrémité libre de la pale.

De façon classique, les pales sont construites de sorte que le foyer des profils, défini généralement comme le point de mi-épaisseur au quart avant de la corde, reste sensiblement situé sur l'axe de variation de pas, et cela tout le long de l'envergure. Par ailleurs, une mise en flèche de l'extrémité libre de la pale s'effectue généralement par déplacement du foyer dans le plan défini, d'une part, par l'axe de variation de pas et, d'autre part, par la direction de la corde du profil dans la zone d'extrémité.

Dans le brevet FR-2 617 118, on décrit un perfectionnement à cette construction classique, consistant à inscrire la ligne des foyers dans un plan passant par l'axe de variation de pas, mais de façon inclinée par rapport à la corde, de sorte que le foyer des profils à l'extrémité externe de la pale est situé sensiblement plus bas que la partie interne de la pale. Le tourbillon marginal engendré par l'extrémité externe d'une pale est ainsi éloigné de la pale suivante, ce qui a pour conséquence de diminuer l'intensité de l'interaction, en particulier en vol stationnaire. Il en résulte une nette diminution de la puissance absorbée par le rotor, notamment en vol stationnaire et à basse vitesse.

Cette façon de faire est désignée par le terme "mise en dièdre" de l'extrémité de pale, bien que, dans le brevet FR-2 617 118, on effectue un déplacement progressif (de type parabolique) du foyer, et non une simple "cassure", comme également dans le brevet FR-2 689 852.

On voit donc qu'aucun des documents ci-dessus ne décrit une structure de pale entièrement dépourvue d'inconvénients, et la présente invention, dans ce contexte, concerne une pale pour voilure tournante, à extrémité en flèche, dont la géométrie est définie de façon optimale pour garantir les meilleures performances, notamment pour le vol à grande vitesse.

A cet effet, la pale à extrémité en flèche pour voilure tournante d'aéronef, destinée à faire partie d'un rotor dont le moyeu est lié à ladite pale, laquelle est susceptible d'être entraînée en rotation autour de l'axe dudit moyeu, ladite pale comportant un bord d'attaque et un bord de fuite, et étant formée de sections transversales élémentaires successives, identifiées par la distance $r$ séparant chacune d'entre elles de l'axe de rotation dudit moyeu, et présentant, chacune, un profil de corde déterminée et un foyer aérodynamique dont le déport par rapport à l'axe de variation de pas, orthogonal à chacune desdites sections, détermine la flèche de ladite pale, est remarquable, selon l'invention, en ce que, ladite pale étant subdivisée, le long de son étendue longitudinale, en quatre zones, à savoir une première zone s'étendant du bord interne de la pale à une première section située à sensiblement 66% de la longueur totale de la pale, comptée à partir de l'axe de rotation du moyeu, une deuxième zone s'étendant de la première section à une deuxième section située à sensiblement 85% de la longueur totale de la pale, une troisième zone s'étendant de la deuxième section à une troisième section située entre 93% et 97% de la longueur totale de la pale, et une quatrième zone s'étendant de la troisième section au bord externe libre de la pale, la longueur de corde L croît de façon généralement linéaire dans ladite première zone, est maximale et constante dans ladite deuxième zone, décroît linéairement dans ladite troisième zone, et décroît suivant une fonction parabolique dans ladite quatrième zone en respectant la continuité du taux de variation de la corde à la limite commune avec la troisième zone, et le déport Y'f du foyer aérodynamique par rapport à l'axe de variation de pas, dans ladite première zone, est positif en direction du bord d'attaque et augmente proportionnellement à la distance r̲, est maximal et constant dans ladite deuxième zone, décroît de façon linéaire et devient négatif dans ladite troisième zone, de sorte que l'angle de flèche Λ garde une valeur constante sensiblement égale à 25° vers l'arrière, et décroît suivant une fonction parabolique dans ladite quatrième zone en respectant la continuité de l'angle de flèche Λ à la limite commune avec la troisième zone et jusqu'à atteindre sa valeur négative la plus basse en extrémité.

Ainsi, la géométrie, telle que définie, de la pale permet de garantir les meilleures performances pour un aéronef à voilure tournante, notamment un hélicoptère, dont la sustentation est assurée par une voilure constituée de telles pales, et volant à une grande vitesse de croisière, entre 315 et 350 km/h par exemple, à un niveau de portance modéré présentant un coefficient de portance moyen des profils Czm compris entre 0,3 et 0,5.

Plus précisément, d'une part, l'emplacement selon l'invention de la position en envergure de la zone de corde maximale, déplacée à proximité de la zone médiane de l'envergure, permet d'obtenir une plus grande capacité de vitesse, en même temps que l'étendue plus importante, résultante, de la zone de diminution de la corde vers l'extrémité. Cette nouvelle disposition permet aussi de raccourcir la zone de réduction de corde en direction de l'attache de pale, ce qui entraîne une rigidification structurelle qui limite les déformations de torsion indésirables.

D'autre part, rappelant que le foyer aérodynamique est défini ici comme le point de chaque section situé au quart avant entre le bord d'attaque et le bord de fuite, le déport Y'f est la distance, dans le sens de la corde, entre l'axe de variation de pas et le foyer, comptée positivement lorsque le déplacement de la section s'effectue en direction du bord d'attaque. L'angle de flèche Λ est défini comme l'angle entre la tangente à la courbe joignant les foyers des sections et l'axe de variation de pas, vu de dessus. La flèche est dirigée vers l'arrière du côté de l'extrémité libre de la pale. L'angle Λ est déduit directement de la loi d'évolution de Y'f :

$$\Lambda\ (r) = \text{arc tg}\ (dY'f/dr)$$

L'effet favorable de l'angle de flèche, réduisant l'intensité des chocs, est pleinement obtenu pour des valeurs de l'angle de flèche Λ comprises entre 30° et 45°, la valeur maximale de 45° n'étant atteinte qu'en bout de pale. L'invention permet de limiter l'angle Λ à une valeur maximale de 45° en extrémité grâce à la diminution très progressive de la corde, combinée à un bord de fuite rectiligne sur toute la partie de pale comprise entre la corde la plus large et l'extrémité.

Une autre conséquence favorable de cette nouvelle disposition consiste en ce que le déport vers l'arrière du foyer aérodynamique en extrémité, par rapport à l'axe de variation de pas, se trouve réduit par rapport notamment au cas du brevet FR-2 689 852, ce qui limite les déformations en torsion de la pale.

La loi d'évolution de la longueur de corde peut être avantageusement comprise entre :

- une limite inférieure ABCDE, telle que les coordonnées des points A, B, C, D et E sont les suivantes :

|   | r/R | L/L̄ |
|---|-----|------|
| A | 0 | 0,55 |
| B | 0,66 | 1,1 |
| C | 0,85 | 1,1 |
| D | 0,93 | 0,73 |
| E | 1 | 0,25 |

les lignes joignant ces points pour former la limite ABCDE étant telles que :

|   | x | L/L̄ |
|---|---|------|
| AB | (r-Ra)/(Rb-Ra) | 0,55 + 0,55x |
| BC | (r-Rb)/(Rc-Rb) | 1,1 |
| CD | (r-Rc)/(Rd-Rc) | 1,1 - 0,37x |

(suite)

|  | x | $L/\bar{L}$ |
|---|---|---|
| DE | (r-Rd)/(Re-Rd) | 0,73 - 0,32375x - 0,15625x$^2$ |

avec Ra, Rb, Rc, Rd et Re représentant la position respective de A, B, C, D et E le long de la pale, et

- une limite supérieure FGHIJ, telle que les coordonnées des points F, G, H, I et J sont les suivantes :

|  | r/R | $L/\bar{L}$ |
|---|---|---|
| F | 0 | 0,65 |
| G | 0,66 | 1,2 |
| H | 0,85 | 1,2 |
| I | 0,97 | 0,83 |
| J | 1 | 0,45 |

les lignes joignant ces points pour former la limite FGHIJ étant telles que :

|  | x | $L/\bar{L}$ |
|---|---|---|
| FG | (r-Rf)/(Rg-Rf) | 0,65 + 0,55x |
| GH | (r-Rg)/(Rh-Rg) | 1,2 |
| HI | (r-Rh)/(Ri-Rh) | 1,2 - 0,37x |
| IJ | (r-Ri)/(Rj-Ri) | 0,83 - 0,0925x - 0,2875x$^2$ |

avec Rf, Rg, Rh, Ri et Rj représentant la position respective de F, G, H, I et J le long de la pale.

Entre les limites inférieure ABCDE et supérieure FGHIJ, une courbe préférée est formée par les points P, Q, R, S et T dont les coordonnées sont les suivantes :

|  | r/R | $L/\bar{L}$ |
|---|---|---|
| P | 0,20223 | 0,7784 |
| Q | 0,66 | 1,168864 |
| R | 0,85 | 1,168864 |
| S | 0,95 | 0,779222 |
| T | 1 | 0,351538 |

les lignes joignant ces points pour former la courbe PQRST étant telles que :

|  | x | $L/\bar{L}$ |
|---|---|---|
| PQ | (r-Rp)/(Rq-Rp) | 0,778400 +0,390464x |
| QR | (r-Rq)/(Rr-Rq) | 1,168864 |
| RS | (r-Rr)/(Rs-Rr) | 1,168864 -0,389642x |
| ST | (r-Rs)/(Rt-Rs) | 0,779222 -0,194821x -0,232863x$^2$ |

avec Rp, Rq, Rr, Rs et Rt représentant la position respective de P, Q, R, S et T le long de la pale.
De même, la loi d'évolution du déport du foyer aérodynamique peut être comprise, de préférence, entre :

- une limite inférieure A'B'C'D'E', telle que les coordonnées des points A', B', C', D' et E' sont les suivantes :

|  | r/R | Y'f/R |
|---|---|---|
| A' | 0 | 0 |
| B' | 0,66 | + 0,005 |
| C' | 0,85 | + 0,005 |
| D' | 0,93 | - 0,053 |
| E' | 1 | - 0,105 |

les lignes joignant ces points pour former la limite A'B'C'D'E' étant telles que :

|  | x | Y'f/R |
|---|---|---|
| A'B' | $(r-Ra')/(Rb'-Ra')$ | $+0,005x$ |
| B'C' | $(r-Rb')/(Rc'-Rb')$ | $+0,005$ |
| C'D' | $(r-Rc')/(Rd'-Rc')$ | $+0,005 -0,058x$ |
| D'E' | $(r-Rd')/(Re'-Rd')$ | $-0,053 -0,05075x - 0,00125x^2$ |

avec Ra', Rb', Rc', Rd' et Re' représentant la position respective de A', B', C', D' et E' le long de la pale, et

- une limite supérieure F'G'H'I'J', telle que les coordonnées des points F', G', H', I' et J' sont les suivantes :

|  | r/R | Y'f/R |
|---|---|---|
| F' | 0 | 0 |
| G' | 0,66 | + 0,030 |
| H' | 0,85 | + 0,030 |
| I' | 0,97 | - 0,013 |
| J' | 1 | - 0,050 |

les lignes joignant ces points pour former la limite F'G'H'I'J' étant telles que :

|  | x | Y'f/R |
|---|---|---|
| F'G' | $(r-Rf')/(Rg'-Rf')$ | $+0,03x$ |
| G'H' | $(r-Rg')/(Rh'-Rg')$ | $+0,03$ |
| H'I' | $(r-Rh')/(Ri'-Rh')$ | $+0,03 -0,043x$ |
| I'J' | $(r-Ri')/(Rj'-Ri')$ | $-0,013 -0,01075x - 0,02625x^2$ |

avec Rf', Rg', Rh', Ri' et Rj' représentant la position respective de F', G', H', I' et J' le long de la pale.

Entre les limites inférieure A'B'C'D'E' et supérieure F'G'H'I'J', une courbe préférée est formée par les points P', Q', R', S' et T' dont les coordonnées sont les suivantes :

|  | r/R | Y'f/R |
|---|---|---|
| P' | 0,20223 | + 0,003396 |
| Q' | 0,66 | + 0,011083 |
| R' | 0,85 | + 0,011083 |
| S' | 0,95 | - 0,035547 |
| T' | 1 | - 0,072113 |

les lignes joignant ces points pour former la courbe P'Q'R' S'T' étant telles que :

|  | x | Y'f/R |
|---|---|---|
| P'Q' | (r-Rp')/(Rq'-Rp') | +0,003396 +0,007687x |
| Q'R' | (r-Rq')/(Rr'-Rq') | +0,011083 |
| R'S' | (r-Rr')/(Rs'-Rr') | +0,011083 -0,046630x |
| S'T' | (r-Rs')/(Rt'-Rs') | -0,035547 -0,023315x -0,013251$x^2$ |

avec Rp', Rq', Rr', Rs' et Rt' représentant la position respective de P', Q', R', S' et T' le long de la pale.

Avantageusement, les paramètres des lois de variation le long de ladite étendue longitudinale et pour chacune desdites zones, d'une part de la longueur L de la corde de chaque section par rapport à la corde moyenne $\bar{L}$ et, d'autre part, du déport Y'f du foyer aérodynamique de chaque section par rapport à l'axe de variation de pas, assurent sensiblement le positionnement du foyer aérodynamique global de ladite pale sur ledit axe de variation de pas.

La loi d'évolution du déplacement vertical du foyer aérodynamique Zv/R peut être, par ailleurs, de telle sorte que le foyer des profils à l'extrémité externe de la pale soit situé sensiblement plus bas que la partie interne de la pale. Le tourbillon marginal engendré par l'extrémité externe d'une pale est ainsi éloigné de la pale suivante, ce qui a pour conséquence de diminuer l'intensité de l'interaction, en particulier en vol stationnaire. Il en résulte une nette diminution de la puissance absorbée par le rotor, notamment en vol stationnaire et à basse vitesse.

Avantageusement, cette loi d'évolution du déplacement vertical du foyer aérodynamique sera comprise entre :

-    une limite inférieure A"B"C"D"E", telle que les coordonnées des points A", B", C", D" et E" sont les suivantes :

|  | r/R | Zv/R |
|---|---|---|
| A" | 0 | - 0,001 |
| B" | 0,66 | - 0,001 |
| C" | 0,85 | - 0,001 |
| D" | 0,93 | - 0,001 |
| E" | 1 | - 0,015 |

les lignes joignant ces points pour former la limite A"B"C"D"E" étant telles que :

|  | x | Zv/R |
|---|---|---|
| A"B" | (r-Ra")/(Rb"-Ra") | -0,001 |
| B"C" | (r-Rb")/(Rc"-Rb") | -0,001 |
| C"D" | (r-Rc")/(Rd"-Rc") | -0,001 |
| D"E" | (r-Rd")/(Re"-Rd") | -0,001 -0,014$x^2$ |

avec Ra", Rb", Rc", Rd" et Re" représentant la position respective de A", B", C", D" et E" le long de la pale, et

-    une limite supérieure F"G"H"I"J", telle que les coordonnées des points F", G", H", I" et J" sont les suivantes :

|  | r/R | Zv/R |
|---|---|---|
| F" | 0 | + 0,001 |
| G" | 0,66 | + 0,001 |
| H" | 0,85 | + 0,001 |
| I" | 0,97 | + 0,001 |
| J" | 1 | - 0,005 |

les lignes joignant ces points pour former la limite F"G"H"I"J" étant telles que :

|  | x | Zv/R |
|---|---|---|
| F"G" | (r-Rf")/(Rg"-Rf") | +0,001 |
| G"H" | (r-Rg")/(Rh"-Rg") | +0,001 |
| H"I" | (r-Rh")/(Ri"-Rh") | +0,001 |
| I"J" | (r-Ri")/(Rj"-Ri") | $+0,001 -0,006x^2$ |

avec Rf", Rg", Rh", Ri" et Rj" représentant la position respective de F", G", H", I" et J" le long de la pale.

Entre les limites inférieure A"B"C"D"E" et supérieure F"G"H"I"J", une courbe préférée est formée par les points P", Q", R", S" et T" dont les coordonnées sont les suivantes :

|  | r/R | Zv/R |
|---|---|---|
| P" | 0,20223 | 0 |
| Q" | 0,66 | 0 |
| R" | 0,85 | 0 |
| S" | 0,95 | 0 |
| T" | 1 | -0,009050 |

les lignes joignant ces points pour former la courbe P"Q"R" S"T" étant telles que :

|  | x | Zv/R |
|---|---|---|
| P"Q" | (r-Rp")/(Rq"-Rp") | 0 |
| Q"R" | (r-Rq")/(Rr"-Rq") | 0 |
| R"S" | (r-Rr")/(Rs"-Rr") | 0 |
| S"T" | (r-Rs")/(Rt"-Rs") | $- 0,00905x^2$ |

avec Rp", Rq", Rr", Rs" et Rt" représentant la position respective de P", Q", R", S" et T" le long de la pale.
La loi d'évolution de l'épaisseur relative des sections e/L peut être, de plus, comprise entre :

- une limite inférieure UVW, telle que les coordonnées des points U, V et W sont les suivantes :

|  | r/R | e/L |
|---|---|---|
| U | 0 | 0,14 |
| V | 0,4 | 0,14 |
| W | 1 | 0,06 |

les lignes joignant ces points pour former la limite UVW étant telles que :

|  | x | e/L |
|---|---|---|
| UV | (r-Ru)/(Rv-Ru) | 0,14 |
| VW | (r-Rv)/(Rw-Rv) | 0,14 -0,08x |

avec Ru, Rv, et Rw représentant la position respective de U, V et W le long de la pale, et

- une limite supérieure XYZ, telle que les coordonnées des points X, Y et Z sont les suivantes :

|   | r/R | e/L |
|---|-----|-----|
| X | 0 | 0,16 |
| Y | 0,4 | 0,16 |
| Z | 1 | 0,08 |

les lignes joignant ces points pour former la limite XYZ étant telles que :

|    | x | e/L |
|----|---|-----|
| XY | (r-Rx)/(Ry-Rx) | 0,16 |
| YZ | (r-Ry)/(Rz-Ry) | 0,16 -0,08x |

avec Rx, Ry, et Rz représentant la position respective de X, Y et Z le long de la pale.

Entre les limites inférieure UVW et supérieure XYZ, une courbe préférée est formée par les points K, L et M dont les coordonnées sont les suivantes :

|   | r/R | e/L |
|---|-----|-----|
| K | 0,20223 | 0,15 |
| L | 0,4 | 0,15 |
| M | 1 | 0,07 |

les lignes joignant ces points pour former la limite KLM étant telles que :

|    | x | e/L |
|----|---|-----|
| KL | (r-Rk)/(Rl-Rk) | 0,15 |
| LM | (r-Rl)/(Rm-Rl) | 0,15 -0,08x |

avec Rk, Rl, et Rm représentant la position respective de K, L et M le long de la pale.

Les figures du dessin annexé feront bien comprendre comment l'invention peut être réalisée. Sur ces figures, des références identiques désignent des éléments semblables.

La figure 1 est une vue schématique en perspective d'une pale de rotor d'hélicoptère conforme à la présente invention.

La figure 2 illustre, en vue de dessus, un exemple de réalisation de la pale selon l'invention.

La figure 3 est une courbe montrant la variation de la longueur de la corde le long de l'étendue longitudinale de la pale.

La figure 4 est une courbe montrant l'évolution du déport du foyer aérodynamique le long de l'étendue longitudinale de la pale.

La figure 5 est une courbe montrant le déplacement vertical du centre de vrillage par rapport au plan de construction, tel que défini par la suite, de la pale.

La figure 6 est une courbe montrant l'évolution de l'épaisseur des sections droites de pale.

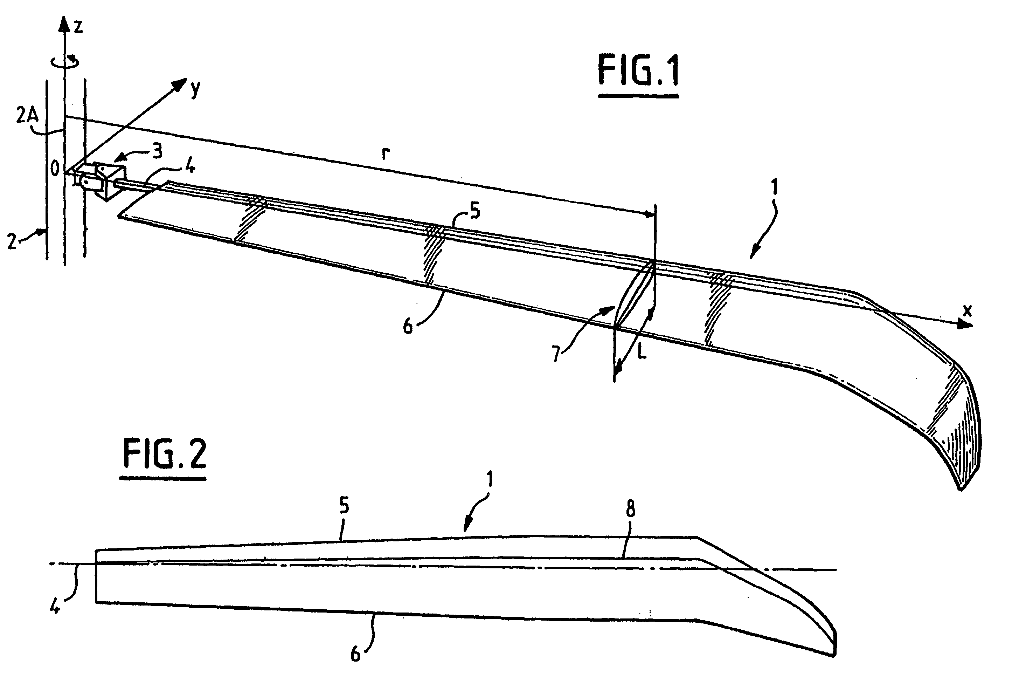

La pale 1 à extrémité en flèche, conforme à la présente invention et montrée sur la figure 1, fait partie d'un rotor dont le moyeu 2 est illustré de façon purement schématique et dont les autres pales ne sont pas représentées. La pale 1 est liée au moyeu 2 par des organes 3 d'articulation et de retenue de la pale, particulièrement une articulation de changement de pas pour la pale autour d'un axe 4 dit de variation commandée de pas, comme cela est usuel.

Par ailleurs, la pale 1, comportant un bord d'attaque 5 et un bord de fuite 6, est formée de sections transversales élémentaires successives, dont une 7 est représentée sur la figure 1. Chaque section élémentaire 7 est identifiée par la distance r séparant ladite section de l'axe de rotation 2A du moyeu 2, et présente un profil de corde L déterminée, et un foyer aérodynamique (point d'application des variations des forces de portance aérodynamique), dont la "courbe" le long de l'étendue longitudinale de la pale est représentée en 8 sur la figure 2. Le déport du foyer aérodynamique par rapport à l'axe de variation de pas 4, orthogonal auxdites sections successives 7, détermine la flèche de la pale, comme on le voit mieux sur la figure 2.

On décrira ci-après la construction géométrique permettant de définir rigoureusement la surface d'une pale 1 selon l'invention.

Le référentiel de construction est choisi comme étant un trièdre orthonormé dont l'origine 0 est le centre du rotor.

L'axe OX est l'axe de variation de pas 4, de sorte que la première coordonnée coïncide avec le rayon r compté à partir du centre de rotation 0. Le deuxième axe OY, orthogonal à l'axe OX, constitue la direction de référence de calage, et est dirigé, arbitrairement, vers le bord d'attaque 5. Le troisième axe OZ est orthogonal au plan défini par les axes OX et OY, et est dirigé, arbitrairement, vers le haut (extrados des profils). Le trièdre est de sens direct si le rotor tourne dans le sens anti-horaire. Il est bien entendu, toutefois, que tout ce qui suit reste valable pour un rotor tournant en sens horaire.

Le plan OX, OY sera appelé plan de construction ou plan de référence. Le plan OX, OY sera choisi de façon à coïncider avec le plan de portance nulle de la pale. La surface de la pale (enveloppe de la pale) est engendrée par un ensemble de sections planes élémentaires 7 qui sont toutes parallèles les unes aux autres et au plan OX, OZ et orthogonales à l'axe de variation de pas OX.

Chaque section élémentaire peut être identifiée par son rayon r (distance de la section à l'axe OY), compris entre R0 (début de la partie empennée) et R (extrémité externe de la pale).

Les paramètres définissant le contour d'une section transversale élémentaire quelconque 7 de la pale 1 sont généralement connus, notamment à partir du brevet FR-2 689 852.

La pale qui fait l'objet de l'invention est subdivisée en quatre zones, permettant de la décrire, indépendamment du vrillage et de l'épaisseur relative des sections qui nécessitent des découpages particuliers précisés ci-après. Ces quatre zones sont :

- une première zone, qui s'étend depuis la section R0, correspondant au début de la partie empennée, jusqu'à la section RI située sensiblement à 66% du rayon total R ;
- une deuxième zone, qui s'étend depuis la section R1 jusqu'à la section R2 située sensiblement à 85% du rayon total R ;
- une troisième zone, qui s'étend depuis la section R2 jusqu'à la section R3 située entre 93% et 97% du rayon total R ; et
- une quatrième zone, qui s'étend depuis la section R3 jusqu'au bout libre de la pale (rayon R).

Selon l'invention, dans ces différentes zones, la longueur de corde L croît de façon généralement linéaire dans ladite première zone, est maximale et constante dans ladite deuxième zone, décroît linéairement dans ladite troisième zone, et décroît suivant une fonction parabolique dans ladite quatrième zone en respectant la continuité du taux de variation de la corde à la limite commune avec la troisième zone, et le déport Y'f du foyer aérodynamique par rapport à l'axe de variation de pas, dans ladite première zone, est positif et augmente proportionnellement à la distance r, est maximal et constant dans ladite deuxième zone, décroît de façon linéaire et devient négatif dans ladite troisième zone, de sorte que l'angle de flèche $\Lambda$ garde une valeur constante sensiblement égale à 25° vers l'arrière, et décroît suivant une fonction parabolique dans ladite quatrième zone en respectant la continuité de l'angle de flèche $\Lambda$ à la limite commune avec la troisième zone et jusqu'à atteindre sa valeur négative la plus basse en extrémité.

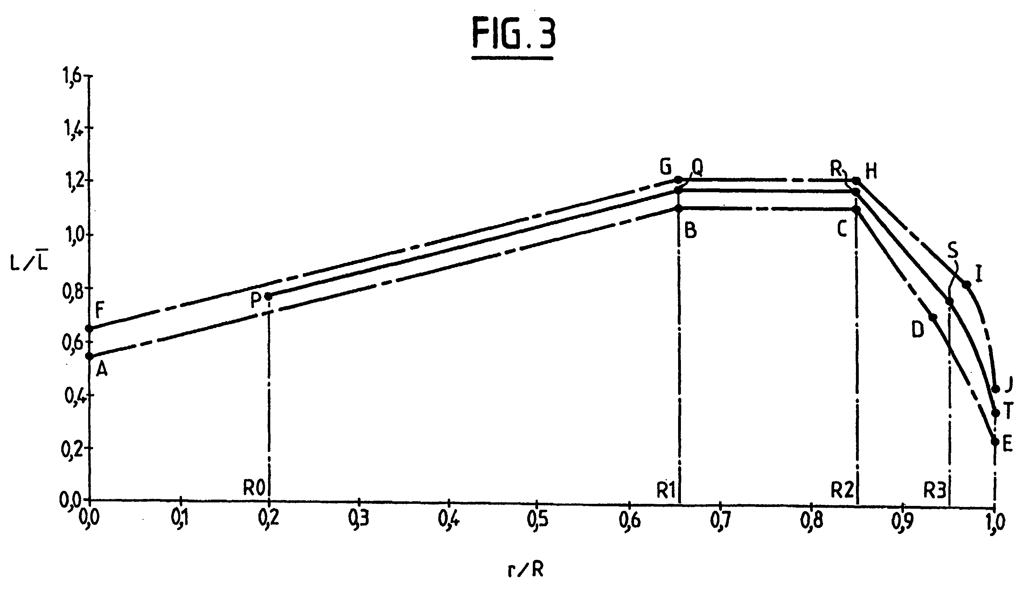

Comme on le voit sur la figure 3, la loi d'évolution de la longueur de corde peut être avantageusement comprise entre :

- une limite inférieure ABCDE, telle que les coordonnées des points A, B, C, D et E sont les suivantes :

|   | r/R | L/$\bar{L}$ |
|---|-----|-----|
| A | 0 | 0,55 |
| B | 0,66 | 1,1 |
| C | 0,85 | 1,1 |
| D | 0,93 | 0,73 |
| E | 1 | 0,25 |

les lignes joignant ces points pour former la limite ABCDE étant telles que :

| | x | L/$\bar{L}$ |
|---|---|---|
| AB | (r-Ra)/(Rb-Ra) | 0,55 + 0,55x |
| BC | (r-Rb)/(Rc-Rb) | 1,1 |
| CD | (r-Rc)/(Rd-Rc) | 1,1 - 0,37x |
| DE | (r-Rd)/(Re-Rd) | 0,73 - 0,32375x - 0,15625x$^2$ |

avec Ra, Rb, Rc, Rd et Re représentant la position respective de A, B, C, D et E le long de la pale, et

- une limite supérieure FGHIJ, telle que les coordonnées des points F, G, H, I et J sont les suivantes :

| | r/R | L/$\bar{L}$ |
|---|---|---|
| F | 0 | 0,65 |
| G | 0,66 | 1,2 |
| H | 0,85 | 1,2 |
| I | 0,97 | 0,83 |
| J | 1 | 0,45 |

les lignes joignant ces points pour former la limite FGHIJ étant telles que :

| | x | L/$\bar{L}$ |
|---|---|---|
| FG | (r-Rf)/(Rg-Rf) | 0,65 + 0,55x |
| GH | (r-Rg)/(Rh-Rg) | 1,2 |
| HI | (r-Rh)/(Ri-Rh) | 1,2 - 0,37x |
| IJ | (r-Ri)/(Rj-Ri) | 0,83 - 0,0925x - 0,2875x$^2$ |

avec Rf, Rg, Rh, Ri et Rj représentant la position respective de F, G, H, I et J le long de la pale.

Entre les limites inférieure ABCDE et supérieure FGHIJ, une courbe préférée, comme montré sur la figure 3, est formée par les points P, Q, R, S et T dont les coordonnées sont les suivantes :

| | r/R | L/L |
|---|---|---|
| P | 0,20223 | 0,7784 |
| Q | 0,66 | 1,168864 |
| R | 0,85 | 1,168864 |
| S | 0,95 | 0,779222 |
| T | 1 | 0,351538 |

les lignes joignant ces points pour former la courbe PQRST étant telles que :

| | x | L/$\bar{L}$ |
|---|---|---|
| PQ | (r-Rp)/(Rq-Rp) | 0,778400 +0,390464x |
| QR | (r-Rq)/(Rr-Rq) | 1,168864 |
| RS | (r-Rr)/(Rs-Rr) | 1,168864 -0,389642x |
| ST | (r-Rs)/(Rt-Rs) | 0,779222 -0,194821x -0,232863x$^2$ |

avec Rp, Rq, Rr, Rs et Rt représentant la position respective de P, Q, R, S et T le long de la pale.

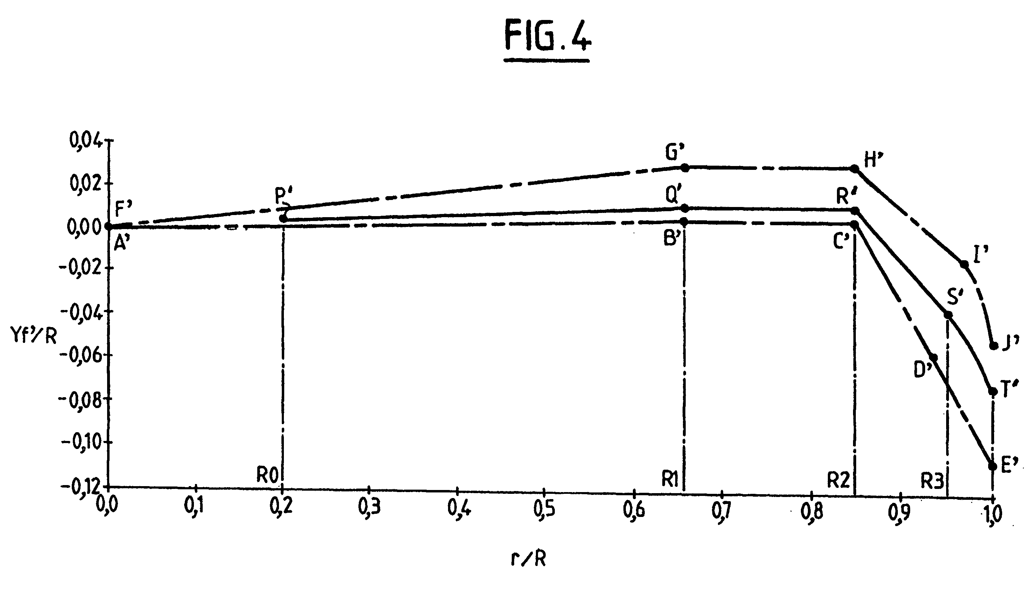

De même, comme on le voit sur la figure 4, la loi d'évolution du déport du foyer aérodynamique peut être comprise, de préférence, entre :

- une limite inférieure A'B'C'D'E', telle que les coordonnées des points A', B', C', D' et E' sont les suivantes :

|     | r/R  | Y'f/R    |
|-----|------|----------|
| A'  | 0    | 0        |
| B'  | 0,66 | + 0,005  |
| C'  | 0,85 | + 0,005  |
| D'  | 0,93 | - 0,053  |
| E'  | 1    | - 0,105  |

les lignes joignant ces points pour former la limite A'B'C'D'E' étant telles que :

|      | x                  | Y'f/R                              |
|------|--------------------|------------------------------------|
| A'B' | (r-Ra')/(Rb'-Ra')  | +0,005x                            |
| B'C' | (r-Rb')/(Rc'-Rb')  | +0,005                             |
| C'D' | (r-Rc')/(Rd'-Rc')  | +0,005 -0,058x                     |
| D'E' | (r-Rd')/(Re'-Rd')  | -0,053 -0,05075x - 0,00125$x^2$    |

avec Ra', Rb', Rc', Rd' et Re' représentant la position respective de A', B', C', D' et E' le long de la pale, et

- une limite supérieure F'G'H'I'J', telle que les coordonnées des points F', G', H', I' et J' sont les suivantes :

|     | r/R  | Y'f/R    |
|-----|------|----------|
| F'  | 0    | 0        |
| G'  | 0,66 | + 0,030  |
| H'  | 0,85 | + 0,030  |
| I'  | 0,97 | - 0,013  |
| J'  | 1    | - 0,050  |

les lignés joignant ces points pour former la limite F'G'H'I'J' étant telles que :

|      | x                  | Y'f/R                              |
|------|--------------------|------------------------------------|
| F'G' | (r-Rf')/(Rg'-Rf')  | +0,03x                             |
| G'H' | (r-Rg')/(Rh'-Rg')  | +0,03                              |
| H'I' | (r-Rh')/(Ri'-Rh')  | +0,03 -0,043x                      |
| I'J' | (r-Ri')/(Rj'-Ri')  | -0,013 -0,01075x - 0,02625$x^2$    |

avec Rf', Rg', Rh', Ri' et Rj' représentant la position respective de F', G', H', I' et J' le long de la pale.

Entre les limites inférieure A'B'C'D'E' et supérieure F'G'H'I'J', une courbe préférée, comme montré sur la figure 4, est formée par les points P', Q', R', S' et T' dont les coordonnées sont les suivantes :

|     | r/R      | Y'f/R        |
|-----|----------|--------------|
| P'  | 0,20223  | + 0,003396   |

(suite)

|     | r/R  | Y'f/R       |
| --- | ---- | ----------- |
| Q'  | 0,66 | + 0,011083  |
| R'  | 0,85 | + 0,011083  |
| S'  | 0,95 | - 0,035547  |
| T'  | 1    | - 0,072113  |

les lignes joignant ces points pour former la courbe P'Q'R' S'T' étant telles que :

|      | x                 | Y'f/R                              |
| ---- | ----------------- | ---------------------------------- |
| P'Q' | (r-Rp')/(Rq'-Rp') | +0,003396 +0,007687x               |
| Q'R' | (r-Rq')/(Rr'-Rq') | +0,011083                          |
| R'S' | (r-Rr')/(Rs'-Rr') | +0,011083 -0,046630x               |
| S'T' | (r-Rs')/(Rt'-Rs') | -0,035547 -0,023315x -0,013251$x^2$ |

avec Rp', Rq', Rr', Rs' et Rt' représentant la position respective de P', Q', R', S' et T' le long de la pale.

Comme déjà indiqué, il est par ailleurs avantageux que les paramètres des lois de variation le long de ladite étendue longitudinale et pour chacune desdites zones, d'une part de la longueur L de la corde de chaque section par rapport à la corde moyenne $\bar{L}$ et, d'autre part, du déport Y'f du foyer aérodynamique de chaque section par rapport à l'axe de variation de pas, assurent sensiblement le positionnement du foyer aérodynamique global de ladite pale sur ledit axe de variation de pas.

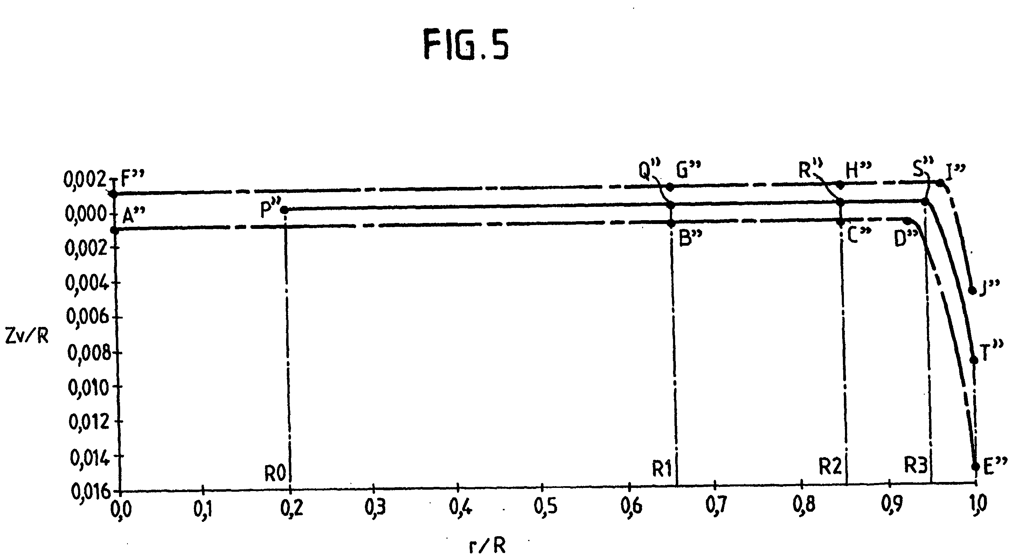

En outre, comme on le voit sur la figure 5, la loi d'évolution du déplacement vertical du foyer aérodynamique Zv/R peut être, par ailleurs, comprise entre :

-    une limite inférieure A"B"C"D"E", telle que les coordonnées des points A", B", C", D" et E" sont les suivantes :

|     | r/R  | Zv/R     |
| --- | ---- | -------- |
| A"  | 0    | - 0,001  |
| B"  | 0,66 | - 0,001  |
| C"  | 0,85 | - 0,001  |
| D"  | 0,93 | - 0,001  |
| E"  | 1    | - 0,015  |

les lignes joignant ces points pour former la limite A"B"C"D"E" étant telles que :

|      | x                 | Zv/R                 |
| ---- | ----------------- | -------------------- |
| A"B" | (r-Ra")/(Rb"-Ra") | -0,001               |
| B"C" | (r-Rb")/(Rc"-Rb") | -0,001               |
| C"D" | (r-Rc")/(Rd"-Rc") | -0,001               |
| D"E" | (r-Rd")/(Re"-Rd") | -0,001 -0,014$x^2$   |

avec Ra", Rb", Rc", Rd" et Re" représentant la position respective de A", B", C", D" et E" le long de la pale, et

-    une limite supérieure F"G"H"I"J", telle que les coordonnées des points F", G", H", I" et J" sont les suivantes :

|     | r/R | Zv/R      |
| --- | --- | --------- |
| F"  | 0   | + 0,001   |

(suite)

|  | r/R | Zv/R |
|---|---|---|
| G" | 0,66 | + 0,001 |
| H" | 0,85 | + 0,001 |
| I" | 0,97 | + 0,001 |
| J" | 1 | - 0,005 |

les lignes joignant ces points pour former la limite F"G"H"I"J" étant telles que :

|  | x | Zv/R |
|---|---|---|
| F"G" | (r-Rf")/(Rg"-Rf") | +0,001 |
| G"H" | (r-Rg")/(Rh"-Rg") | +0,001 |
| H"I" | (r-Rh")/(Ri"-Rh") | +0,001 |
| I"J" | (r-Ri")/(Rj"-Ri") | $+0,001 -0,006x^2$ |

avec Rf", Rg", Rh", Ri" et Rj" représentant la position respective de F", G", H", I" et J" le long de la pale.

Entre les limites inférieure A"B"C"D"E" et supérieure F"G"H"I"J", une courbe préférée, comme montré sur la figure 5, est formée par les points P", Q", R", S" et T" dont les coordonnées sont les suivantes :

|  | r/R | Zv/R |
|---|---|---|
| P" | 0,20223 | 0 |
| Q" | 0,66 | 0 |
| R" | 0,85 | 0 |
| S" | 0,95 | 0 |
| T" | 1 | -0,009050 |

les lignes joignant ces points pour former la courbe P"Q"R" S"T" étant telles que :

|  | x | Zv/R |
|---|---|---|
| P"Q" | (r-Rp")/(Rq"-Rp") | 0 |
| Q"R" | (r-Rq")/(Rr"-Rq") | 0 |
| R"S" | (r-Rr")/(Rs"-Rr") | 0 |
| S"T" | (r-Rs")/(Rt"-Rs") | $- 0,00905x^2$ |

avec Rp", Rq", Rr", Rs" et Rt" représentant la position respective de P", Q", R", S" et T" le long de la pale.

Par ailleurs, la forme de pale recommandée peut être dotée d'un vrillage aérodynamique linéaire, d'une amplitude totale sensiblement comprise entre -8° et -14° entre le centre du rotor et l'extrémité libre de la pale. En accord avec l'usage courant, le vrillage est compté négativement lorsque le bord d'attaque des sections extérieures est abaissé par rapport à celui des sections situées plus près du centre. Pour obtenir le calage géométrique de chaque section, compté par rapport à la corde de référence, il convient d'ajouter l'incidence de portance nulle du profil considéré au vrillage aérodynamique, comme expliqué en détail dans le document FR-A-2 689 852.

Avec la réduction de corde à l'emplanture telle que préconisée par la présente invention, il s'avère nécessaire d'augmenter l'épaisseur relative au-delà de 14% afin de préserver une raideur en torsion au moins équivalente à celle des pales usuelles. Toutefois, il convient de ne pas dépasser 16% afin d'éviter toute dégradation des capacités de portance, et de ne pas augmenter la traînée aérodynamique. L'épaisseur relative doit être maintenue entre 14 et 16% sur la partie de la pale où la corde reste faible. Cependant, au-delà de la section située à 40% de l'envergure, la corde devient importante et l'épaisseur relative peut commencer à décroître afin de retarder les effets néfastes de la compressibilité de l'air.

Du côté de l'extrémité libre, il convient de minimiser l'intensité des ondes de choc lorsque la pale se trouve en position avançante lors d'un vol à grande vitesse. La forme conforme à la présente invention utilise des profils dont l'épaisseur relative n'excède pas 8% au niveau de cette extrémité. Cependant, cette épaisseur ne doit pas être réduite à moins de 6% afin de préserver une capacité de portance suffisante qui reste nécessaire lorsque l'extrémité passe en position reculante.

Entre la section à 40% de l'envergure et l'extrémité libre, l'épaisseur relative diminuera de façon sensiblement linéaire. Un découpage de la pale en deux zones seulement suffit à décrire cette évolution.

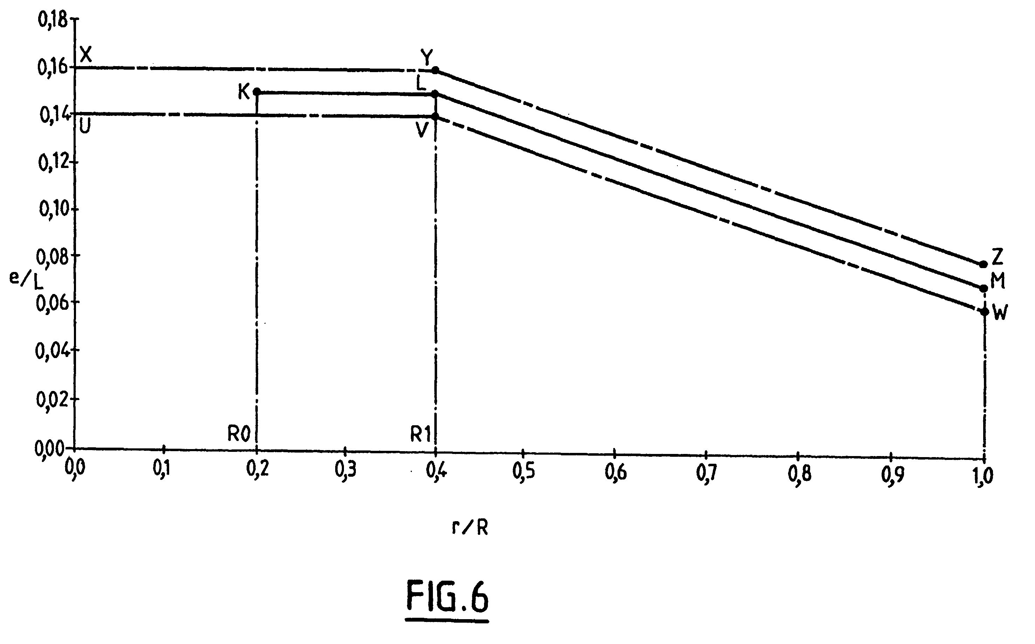

Comme on le voit sur la figure 6, la loi d'évolution de l'épaisseur relative des sections e/L peut être, ainsi, comprise entre :

- une limite inférieure UVW, telle que les coordonnées des points U, V et W sont les suivantes :

|   | r/R | e/L |
|---|-----|-----|
| U | 0 | 0,14 |
| V | 0,4 | 0,14 |
| W | 1 | 0,06 |

les lignes joignant ces points pour former la limite UVW étant telles que :

|    | x | e/L |
|----|---|-----|
| UV | (r-Ru)/(Rv-Ru) | 0,14 |
| VW | (r-Rv)/(Rw-Rv) | 0,14 -0,08x |

avec Ru, Rv, et Rw représentant la position respective de U, V et W le long de la pale, et

- une limite supérieure XYZ, telle que les coordonnées des points X, Y et Z sont les suivantes :

|   | r/R | e/L |
|---|-----|-----|
| X | 0 | 0,16 |
| Y | 0,4 | 0,16 |
| Z | 1 | 0,08 |

les lignes joignant ces points pour former la limite XYZ étant telles que :

|    | x | e/L |
|----|---|-----|
| XY | (r-Rx)/(Ry-Rx) | 0,16 |
| YZ | (r-Ry)/(Rz-Ry) | 0,16 -0,08x |

avec Rx, Ry, et Rz représentant la position respective de X, Y et Z le long de la pale.

Entre les limites inférieure UVW et supérieure XYZ, une courbe préférée, comme montré sur la figure 6, est formée par les points K, L et M dont les coordonnées sont les suivantes :

|   | r/R | e/L |
|---|-----|-----|
| K | 0,20223 | 0,15 |
| L | 0,4 | 0,15 |
| M | 1 | 0,07 |

les lignes joignant ces points pour former la limite KLM étant telles que :

|    | x | e/L |
|----|---|-----|
| KL | (r-Rk)/(Rl-Rk) | 0,15 |
| LM | (r-Rl)/(Rm-Rl) | 0,15 -0,08x |

avec Rk, Rl, et Rm représentant la position respective de K, L et M le long de la pale.

**Revendications**

1. Pale à extrémité en flèche pour voilure tournante d'aéronef, destinée à faire partie d'un rotor dont le moyeu (2) est lié à ladite pale (1), laquelle est susceptible d'être entraînée en rotation autour de l'axe dudit moyeu, ladite pale (1) comportant un bord d'attaque (5) et un bord de fuite (6), et étant formée de sections transversales élémentaires successives (7), identifiées par la distance r̲ séparant chacune d'entre elles de l'axe de rotation dudit moyeu, et présentant, chacune, un profil de corde déterminée et un foyer aérodynamique dont le déport par rapport à l'axe de variation de pas, orthogonal à chacune desdites sections, détermine la flèche de ladite pale, **caractérisée en ce que**, ladite pale (1) étant subdivisée, le long de son étendue longitudinale, en quatre zones, à savoir une première zone s'étendant du bord interne de la pale R0 à une première section R1 située à sensiblement 66% de la longueur totale de la pale, comptée à partir de l'axe de rotation du moyeu, une deuxième zone s'étendant de la première section R1 à une deuxième section R2 située à sensiblement 85% de la longueur totale de la pale, une troisième zone s'étendant de la deuxième section R2 à une troisième section R3 située entre 93% et 97% de la longueur totale de la pale, et une quatrième zone s'étendant de la troisième section R3 au bord externe libre R de la pale, la longueur de corde L croît de façon généralement linéaire dans ladite première zone, est maximale et constante dans ladite deuxième zone, décroît linéairement dans ladite troisième zone, et décroît suivant une fonction parabolique dans ladite quatrième zone en respectant la continuité du taux de variation de la corde à la limite commune avec la troisième zone, et le déport Y'f du foyer aérodynamique par rapport à l'axe de variation de pas, dans ladite première zone, est positif en direction du bord d'attaque et augmente proportionnellement à la distance r̲, est maximal et constant dans ladite deuxième zone, décroît de façon linéaire et devient négatif dans ladite troisième zone, de sorte que l'angle de flèche Λ garde une valeur constante sensiblement égale à 25° vers l'arrière, et décroît suivant une fonction parabolique dans ladite quatrième zone en respectant la continuité de l'angle de flèche Λ à la limite commune avec la troisième zone.

2. Pale selon la revendication 1, **caractérisée en ce que** la loi d'évolution de la longueur de corde est comprise entre :

   - une limite inférieure ABCDE, telle que les coordonnées des points A, B, C, D et E sont les suivantes :

|    | r/R | L/L̄ |
|----|-----|------|
| A | 0 | 0,55 |
| B | 0,66 | 1,1 |
| C | 0,85 | 1,1 |
| D | 0,93 | 0,73 |
| E | 1 | 0,25 |

   les lignes joignant ces points pour former la limite ABCDE étant telles que :

|    | x | L/L̄ |
|----|---|------|
| AB | (r-Ra)/(Rb-Ra) | 0,55 + 0,55x |
| BC | (r-Rb)/(Rc-Rb) | 1,1 |
| CD | (r-Rc)/(Rd-Rc) | 1,1 - 0,37x |
| DE | (r-Rd)/(Re-Rd) | $0,73 - 0,32375x - 0,15625x^2$ |

avec Ra, Rb, Rc, Rd et Re représentant la position respective de A, B, C, D et E le long de la pale, et

- une limite supérieure FGHIJ, telle que les coordonnées des points F, G, H, I et J sont les suivantes :

|   | r/R | L/$\bar{L}$ |
|---|-----|------|
| F | 0 | 0,65 |
| G | 0,66 | 1,2 |
| H | 0,85 | 1,2 |
| I | 0,97 | 0,83 |
| J | 1 | 0,45 |

les lignes joignant ces points pour former la limite FGHIJ étant telles que :

|    | x | L/$\bar{L}$ |
|----|---|------|
| FG | (r-Rf)/(Rg-Rf) | 0,65 + 0,55x |
| GH | (r-Rg)/(Rh-Rg) | 1,2 |
| HI | (r-Rh)/(Ri-Rh) | 1,2 - 0,37x |
| IJ | (r-Ri)/(Rj-Ri) | 0,83 - 0,0925x - 0,2875x$^2$ |

avec Rf, Rg, Rh, Ri et Rj représentant la position respective de F, G, H, I et J le long de la pale.

3. Pale selon la revendication 2,
**caractérisée en ce que**, entre les limites inférieure ABCDE et supérieure FGHIJ, une courbe préférée est formée par les points P, Q, R, S et T dont les coordonnées sont les suivantes :

|   | r/R | L/$\bar{L}$ |
|---|-----|------|
| P | 0,20223 | 0,7784 |
| Q | 0,66 | 1,168864 |
| R | 0,85 | 1,168864 |
| S | 0,95 | 0,779222 |
| T | 1 | 0,351538 |

les lignes joignant ces points pour former la courbe PQRST étant telles que :

|    | x | L/$\bar{L}$ |
|----|---|------|
| PQ | (r-Rp)/(Rq-Rp) | 0,778400 +0,390464x |
| QR | (r-Rq)/(Rr-Rq) | 1,168864 |
| RS | (r-Rr)/(Rs-Rr) | 1,168864 -0,389642x |
| ST | (r-Rs)/(Rt-Rs) | 0,779222 -0,194821x -0,232863x$^2$ |

avec Rp, Rq, Rr, Rs et Rt représentant la position respective de P, Q, R, S et T le long de la pale.

4. Pale selon l'une quelconque des revendications 1 à 3,
**caractérisée en ce que** la loi d'évolution du déport du foyer aérodynamique est comprise entre :

- une limite inférieure A'B'C'D'E', telle que les coordonnées des points A', B', C', D' et E' sont les suivantes :

|  | r/R | Y'f/R |
|---|---|---|
| A' | 0 | 0 |
| B' | 0,66 | + 0,005 |
| C' | 0,85 | + 0,005 |
| D' | 0,93 | - 0,053 |
| E' | 1 | - 0,105 |

les lignes joignant ces points pour former la limite A'B'C'D'E' étant telles que :

|  | x | Y'f/R |
|---|---|---|
| A'B' | (r-Ra')7(Rb'-Ra") | +0,005x |
| B'C' | (r-Rb')/(Rc'-Rb') | +0,005 |
| C'D' | (r-Rc')/(Rd'-Rc') | +0,005 -0,058x |
| D'E' | (r-Rd')/(Re'-Rd') | -0,053 -0,05075x - 0,00125x$^2$ |

avec Ra', Rb', Rc', Rd' et Re' représentant la position respective de A', B', C', D' et E' le long de la pale, et

- une limite supérieure F'G'H'I'J', telle que les coordonnées des points F', G', H', I' et J' sont les suivantes :

|  | r/R | Y'f/R |
|---|---|---|
| F' | 0 | 0 |
| G' | 0,66 | + 0,030 |
| H' | 0,85 | + 0,030 |
| I' | 0,97 | - 0,013 |
| J' | 1 | - 0,050 |

les lignes joignant ces points pour former la limite F'G'H'I'J' étant telles que :

|  | x | Y'f/R |
|---|---|---|
| F'G' | (r-Rf')/(Rg'-Rf') | +0,03x |
| G'H' | (r-Rg')/(Rh'-Rg') | +0,03 |
| H'I' | (r-Rh')/(Ri'-Rh') | +0,03 -0,043x |
| I'J' | (r-Ri')/(Rj'-Ri') | -0,013 -0,01075x - 0,02625x$^2$ |

avec Rf', Rg', Rh', Ri' et Rj' représentant la position respective de F', G', H', I' et J' le long de la pale.

5. Pale selon la revendication 4,
   **caractérisée en ce que**, entre les limites inférieure A'B'C' D'E' et supérieure F'G'H'I'J', une courbe préférée est formée par les points P', Q', R', S' et T' dont les coordonnées sont les suivantes :

|  | r/R | Y'f/R |
|---|---|---|
| P' | 0,20223 | + 0,003396 |
| Q' | 0,66 | + 0,011083 |
| R' | 0,85 | + 0,011083 |
| S' | 0,95 | - 0,035547 |

(suite)

|  | r/R | Y'f/R |
|---|---|---|
| T' | 1 | - 0,072113 |

les lignes joignant ces points pour former la courbe P'Q'R' S'T' étant telles que :

|  | x | Y'f/R |
|---|---|---|
| P'Q' | (r-Rp')/(Rq'-Rp') | +0,003396 +0,007687x |
| Q'R" | (r-Rq')/(Rr'-Rq') | +0,011083 |
| R'S' | (r-Rr')/(Rs'-Rr') | +0,011083 -0,046630x |
| S'T' | (r-Rs')/(Rt'-Rs') | -0,035547 -0,023315x -0,013251$x^2$ |

avec Rp', Rq', Rr', Rs' et Rt' représentant la position respective de P', Q', R', S' et T' le long de la pale.

6.  Pale selon l'une quelconque des revendications 1 à 5,
    **caractérisée en ce que** les paramètres des lois de variation le long de ladite étendue longitudinale et pour chacune desdites zones, d'une part de la longueur L de la corde de chaque section par rapport à la corde moyenne $\bar{L}$ et, d'autre part, du déport Y'f du foyer aérodynamique de chaque section par rapport à l'axe de variation de pas, assurent sensiblement le positionnement du foyer aérodynamique global de ladite pale sur ledit axe de variation de pas.

7.  Pale selon l'une quelconque des revendications 1 à 6,
    **caractérisée en ce que** la loi d'évolution du déplacement vertical du foyer aérodynamique Zv/R est comprise entre :

-   une limite inférieure A"B"C"D"E", telle que les coordonnées des points A", B", C", D" et E" sont les suivantes :

|  | r/R | Zv/R |
|---|---|---|
| A" | 0 | - 0,001 |
| B" | 0,66 | - 0,001 |
| C" | 0,85 | - 0,001 |
| D" | 0,93 | - 0,001 |
| E" | 1 | - 0,015 |

les lignes joignant ces points pour former la limite A"B"C"D"E" étant telles que :

|  | x | Zv/R |
|---|---|---|
| A"B" | (r-Ra")/(Rb"-Ra") | -0,001 |
| B"C" | (r-Rb")/(Rc"-Rb") | -0,001 |
| C"D" | (r-Rc")/(Rd"-Rc") | -0,001 |
| D"E" | (r-Rd")/(Re"-Rd") | -0,001 -0,014$x^2$ |

avec Ra", Rb", Rc", Rd" et Re" représentant la position respective de A", B", C", D" et E" le long de la pale, et

-   une limite supérieure F"G"H"I"J", telle que les coordonnées des points F", G", H", I" et J" sont les suivantes :

|  | r/R | Zv/R |
|---|---|---|
| F" | 0 | + 0,001 |

(suite)

|      | r/R  | Zv/R     |
| ---- | ---- | -------- |
| G"   | 0,66 | + 0,001  |
| H"   | 0,85 | + 0,001  |
| I"   | 0,97 | + 0,001  |
| J"   | 1    | - 0,005  |

les lignes joignant ces points pour former la limite F"G"H"I"J" étant telles que :

|       | x                 | Zv/R              |
| ----- | ----------------- | ----------------- |
| F"G"  | (r-Rf")/(Rg"-Rf") | +0,001            |
| G"H"  | (r-Rg")/(Rh"-Rg") | +0,001            |
| H"I"  | (r-Rh")/(Ri"-Rh") | +0,001            |
| I"J"  | (r-Ri")/(Rj"-Ri") | +0,001 -0,006$x^2$ |

avec Rf", Rg", Rh", Ri" et Rj" représentant la position respective de F", G", H", I" et J" le long de la pale.

8. Pale selon la revendication 7,
   **caractérisée en ce que**, entre les limites inférieure A"B"C" D"E" et supérieure F"G"H"I"J", une courbe préférée est formée par les points P", Q", R", S" et T" dont les coordonnées sont les suivantes :

|     | r/R     | Zv/R      |
| --- | ------- | --------- |
| P"  | 0,20223 | 0         |
| Q"  | 0,66    | 0         |
| R"  | 0,85    | 0         |
| S"  | 0,95    | 0         |
| T"  | 1       | -0,009050 |

les lignes joignant ces points pour former la courbe P"Q"R" S"T" étant telles que :

|       | x                 | Zv/R          |
| ----- | ----------------- | ------------- |
| P"Q"  | (r-Rp")/(Rq"-Rp") | 0             |
| Q"R"  | (r-Rq")/(Rr"-Rq") | 0             |
| R"S"  | (r-Rr")/(Rs"-Rr") | 0             |
| S"T"  | (r-Rs")/(Rt"-Rs") | - 0,00905$x^2$ |

avec Rp", Rq", Rr", Rs" et Rt" représentant la position respective de P", Q", R", S" et T" le long de la pale.

9. Pale selon l'une quelconque des revendications 1 à 8,
   **caractérisée en ce que** la loi d'évolution de l'épaisseur relative des sections e/L est comprise entre :

   - une limite inférieure UVW, telle que les coordonnées des points U, V et W sont les suivantes :

|     | r/R | e/L  |
| --- | --- | ---- |
| U   | 0   | 0,14 |
| V   | 0,4 | 0,14 |

(suite)

|   | r/R | e/L |
|---|---|---|
| W | 1 | 0,06 |

les lignes joignant ces points pour former la limite UVW étant telles que :

|   | x | e/L |
|---|---|---|
| UV | (r-Ru)/(Rv-Ru) | 0,14 |
| VW | (r-Rv)/(Rw-Rv) | 0,14 -0,08x |

avec Ru, Rv, et Rw représentant la position respective de U, V et W le long de la pale, et

- une limite supérieure XYZ, telle que les coordonnées des points X, Y et Z sont les suivantes :

|   | r/R | e/L |
|---|---|---|
| X | 0 | 0,16 |
| Y | 0,4 | 0,16 |
| Z | 1 | 0,08 |

les lignes joignant ces points pour former la limite XYZ étant telles que :

|   | x | e/L |
|---|---|---|
| XY | (r-Rx)/(Ry-Rx) | 0,16 |
| YZ | (r-Ry)/(Rz-Ry) | 0,16 -0,08x |

avec Rx, Ry, et Rz représentant la position respective de X, Y et Z le long de la pale.

10. Pale selon la revendication 9,
   **caractérisée en ce que**, entre les limites inférieure UVW et supérieure XYZ, une courbe préférée est formée par les points K, L et M dont les coordonnées sont les suivantes :

|   | r/R | e/L |
|---|---|---|
| K | 0,20223 | 0,15 |
| L | 0,4 | 0,15 |
| M | 1 | 0,07 |

les lignes joignant ces points pour former la limite KLM étant telles que :

|   | x | e/L |
|---|---|---|
| KL | (r-Rk)/(Rl-Rk) | 0,15 |
| LM | (r-Rl)/(Rm-Rl) | 0,15 -0,08x |

avec Rk, Rl, et Rm représentant la position respective de K, L et M le long de la pale.

**Patentansprüche**

1. Blatt mit Pfeilspitze für die Hubschraube eines Luftfahrzeugs, welches dazu bestimmt ist, zu einem Rotor zu gehören, dessen Nabe (2) mit dem Blatt (1) verbunden ist, welches geeignet ist, um die Achse der Nabe in Drehung versetzt zu werden, wobei das Blatt (1) eine Vorderkante (5) und eine Hinterkante (6) aufweist und aus aufeinanderfolgenden Elementarquerschnitten (7) besteht, die durch den Abstand r **gekennzeichnet sind, durch** den jedes von ihnen von der Rotationsachse der Nabe getrennt ist, und jedes ein festgelegtes Rippenprofil und einen aerodynamischen Mittelpunkt aufweist, dessen Versetzung bezüglich der Achse der Steigungsänderung, orthogonal zu jedem der Querschnitte, den Pfeil des Blattes bestimmt, **dadurch gekennzeichnet**, dass das Blatt (1), welches längs seiner Längsausdehnung in vier Zonen unterteilt ist, nämlich eine erste Zone, die sich von der Innenkante des Blattes R0 bis zu einem ersten Querschnitt R1 erstreckt, der sich bei etwa 66 % der Gesamtlänge des Blattes, gerechnet von der Rotationsachse der Nabe, befindet, eine zweite Zone, die sich von dem ersten Querschnitt R1 bis zu einem zweiten Querschnitt R2 erstreckt, welcher sich bei etwa 85 % der Gesamtlänge des Blattes befindet, eine dritte Zone, die sich von dem zweiten Querschnitt R2 bis zu einem dritten Querschnitt R3 erstreckt, der sich zwischen 93 % und 97 % der Gesamtlänge des Blattes befindet, und eine vierte Zone, die sich vom dritten Querschnitt R3 bis zum freien Außenrand R des Blattes erstreckt, wobei die Rippenlänge L in der ersten Zone im allgemeinen linear zunimmt, in der zweiten Zone maximal und konstant ist, in der dritten Zone linear abnimmt und in der vierten Zone unter Einhaltung der Stetigkeit der Variationsrate der Rippe an der gemeinsamen Grenze mit der dritten Zone nach einer Parabelfunktion abnimmt und die Versetzung Y'f des aerodynamischen Mittelpunkts bezüglich der Achse der Steigungsänderung in der ersten Zone in Richtung der Vorderkante positiv ist und proportional zum Abstand r zunimmt, in der zweiten Zone maximal und konstant ist, in der dritten Zone linear abnimmt und negativ wird, so dass der Pfeilwinkel $\Lambda$ nach hinten einen konstanten Wert beibehält, der etwa gleich 25° ist, und in der vierten Zone nach einer Parabelfunktion abnimmt unter Einhaltung der Stetigkeit des Pfeilwinkels $\Lambda$ an der gemeinsamen Grenze mit der dritten Zone.

2. Blatt nach Anspruch 1,
   **dadurch gekennzeichnet, dass** das Entwicklungsgesetz der Rippenlänge liegt zwischen:

   - einer unteren Grenze ABCDE dergestalt, dass die Koordinaten der Punkte A, B, C, D und E die folgenden sind:

|   | r/R | L/$\bar{L}$ |
|---|---|---|
| A | 0 | 0,55 |
| B | 0,66 | 1,1 |
| C | 0,85 | 1,1 |
| D | 0,93 | 0,73 |
| E | 1 | 0,25 |

   wobei die Linien, die diese Punkte verbinden, um die Grenze ABCDE zu bilden, folgendermaßen verlaufen:

|   | x | L/$\bar{L}$ |
|---|---|---|
| AB | (r-Ra)/(Rb-Ra) | 0,55 + 0,55x |
| BC | (r-Rb)/(Rc-Rb) | 1,1 |
| CD | (r-Rc)/(Rd-Rc) | 1,1 - 0,37x |
| DE | (r-Rd)/(Re-Rd) | $0,73 - 0,32375x - 0,15625x^2$ |

   wobei Ra, Rb, Rc, Rd und Re die jeweilige Position von A, B, C, D und E längs des Blattes darstellen, und

   - einer oberen Grenze FGHIJ dergestalt, dass die Koordinaten der Punkte F, G, H, I und J die folgenden sind:

|   | r/R | L/$\bar{L}$ |
|---|---|---|
| F | 0 | 0,65 |
| G | 0,66 | 1,2 |
| H | 0,85 | 1,2 |
| I | 0,97 | 0,83 |

(fortgesetzt)

|   | r/R | L/L̄ |
|---|-----|------|
| J | 1   | 0,45 |

wobei die Linien, die diese Punkte verbinden, um die Grenze FGHIJ zu bilden, folgendermaßen verlaufen:

|    | x | L/L̄ |
|----|-----------------|------------------------------|
| FG | (r-Rf)/(Rg-Rf)  | 0,65 + 0,55x                 |
| GH | (r-Rg)/(Rh-Rg)  | 1,2                          |
| HI | (r-Rh)/(Ri-Rh)  | 1,2 - 0,37x                  |
| IJ | (r-Ri)/(Rj-Ri)  | $0,83 - 0,0925x - 0,2875x^2$ |

wobei Rf, Rg, Rh, Ri und Rj die jeweilige Position von F, G, H, I und J längs des Blattes darstellen.

3. Blatt nach Anspruch 2,
   **dadurch gekennzeichnet, dass** zwischen der unteren Grenze ABCDE und der oberen Grenze FGHIJ eine bevorzugte Kurve aus den Punkten P, Q, R, S und T gebildet wird, deren Koordinaten die folgenden sind:

|   | r/R | L/ L |
|---|---------|----------|
| P | 0,20223 | 0,7784   |
| Q | 0,66    | 1,168864 |
| R | 0,85    | 1,168864 |
| S | 0,95    | 0,779222 |
| T | 1       | 0,351538 |

wobei die Linien, die diese Punkte verbinden, um die Kurve PQRST zu bilden, folgendermaßen verlaufen:

|    | x | L/L̄ |
|----|-----------------|-------------------------------------|
| PQ | (r-Rp)/(Rq-Rp)  | 0,778400 + 0,390464x                |
| QR | (r-Rq)/(Rr-Rq)  | 1,168864                            |
| RS | (r-Rr)/(Rs-Rr)  | 1,168864 - 0,389642x                |
| ST | (r-Rs)/(Rt-Rs)  | $0,779222 - 0,194821x - 0,232863x^2$ |

wobei Rp, Rq, Rr, Rs und Rt die jeweilige Position von P, Q, R, S und T längs des Blattes darstellen.

4. Blatt nach einem der Ansprüche 1 bis 3,
   **dadurch gekennzeichnet, dass** das Entwicklungsgesetz der Versetzung des aerodynamischen Mittelpunkts liegt zwischen:

   - einer unteren Grenze A'B'C'D'E' dergestalt, dass die Koordinaten der Punkte A', B', C', D' und E' die folgenden sind:

|    | r/R  | Y'f/R   |
|----|------|---------|
| A' | 0    | 0       |
| B' | 0,66 | + 0,005 |
| C' | 0,85 | + 0,005 |

(fortgesetzt)

|  | r/R | Y'f/R |
|---|---|---|
| D' | 0,93 | - 0,053 |
| E' | 1 | - 0,105 |

wobei die Linien, die diese Punkte verbinden, um die Grenze A'B'C'D'E' zu bilden, folgendermaßen verlaufen:

|  | x | Y'f/R |
|---|---|---|
| A'B' | (r-Ra')/(Rb'-Ra') | + 0,005x |
| B'C' | (r-Rb')/(Rc'-Rb') | + 0,005 |
| C'D' | (r-Rc')/(Rd'-Rc') | + 0,005 - 0,058x |
| D'E' | (r-Rd')/(Re'-Rd') | - 0,053 - 0,05075x - 0,00125x$^2$ |

wobei Ra', Rb', Rc', Rd' und Re' die jeweilige Position von A', B', C', D' und E' längs des Blattes darstellen, und

- einer oberen Grenze F'G'H'I'J' dergestalt, dass die Koordinaten der Punkte F', G', H', I' und J' die folgenden sind:

|  | r/R | Y'f/R |
|---|---|---|
| F' | 0 | 0 |
| G' | 0,66 | + 0,030 |
| H' | 0,85 | + 0,030 |
| I' | 0,97 | - 0,013 |
| J' | 1 | - 0,050 |

wobei die Linien, die diese Punkte verbinden, um die Grenze F'G'H'I'J' zu bilden, folgendermaßen verlaufen:

|  | x | Y'f/R |
|---|---|---|
| F'G' | (r-Rf')/(Rg'-Rf') | + 0,03x |
| G'H' | (r-Rg')/(Rh'-Rg') | + 0,03 |
| H'I' | (r-Rh')/(Ri'-Rh') | + 0,03 - 0,043x |
| I'J' | (r-Ri')/(Rj'-Ri') | - 0,013 - 0,01075x - 0,02625x$^2$ |

wobei Rf', Rg', Rh', Ri' und Rj' die jeweilige Position von F', G', H', I' und J' längs des Blattes darstellen.

**5.** Blatt nach Anspruch 4,
**dadurch gekennzeichnet, dass** zwischen den Grenzen der unteren A'B'C'D'E' und der oberen F'G'H'I'J' eine bevorzugte Kurve aus den Punkten P', Q', R', S' und T' gebildet wird, deren Koordinaten die folgenden sind:

|  | r/R | Y'f/R |
|---|---|---|
| P' | 0,20223 | + 0,003396 |
| Q' | 0,66 | + 0,011083 |
| R' | 0,85 | + 0,011083 |
| S' | 0,95 | - 0,035547 |
| T' | 1 | - 0,072113 |

wobei die Linien, die diese Punkte verbinden, um die Kurve P'Q'R'S'T' zu bilden, folgendermaßen verlaufen:

|  | x | Y'f/R |
|---|---|---|
| P'Q' | (r-Rp')/(Rq'-Rp') | + 0,003396 + 0,007687x |
| Q'R' | (r-Rq')/(Rr'-Rq') | + 0,011083 |
| R'S' | (r-Rr')/(Rs'-Rr') | + 0,011083 - 0,046630x |
| S'T' | (r-Rs')/(Rt'-Rs') - | 0,035547 - 0,023315x - 0,013251$x^2$ |

wobei Rp', Rq', Rr', Rs' und Rt' die jeweilige Position von P', Q', R', S' und T' längs des Blattes darstellen.

6. Blatt nach einem der Ansprüche 1 bis 5, **dadurch gekennzeichnet, dass** die Parameter der Gesetze für die Veränderung längs der Längsausdehnung und für jede der Zonen, einerseits von der Länge L der Rippe eines jeden Querschnitts bezüglich des Rippenmittelwerts $\bar{L}$ und andererseits von der Versetzung Y'f des aerodynamischen Mittelpunktes eines jeden Querschnitts bezüglich der Achse der Steigungsänderung, etwa die Positionierung des globalen aerodynamischen Mittelpunktes des Blatts auf der Achse der Steigungsänderung gewährleisten.

7. Blatt nach einem der Ansprüche 1 bis 6,
   **dadurch gekennzeichnet, dass** das Entwicklungsgesetz der Vertikalverschiebung des aerodynamischen Mittelpunkts Zv/R liegt zwischen:

   - einer unteren Grenze A"B"C"D"E" dergestalt, dass die Koordinaten der Punkte A", B", C", D" und E" die folgenden sind:

|  | r/R | Zv/R |
|---|---|---|
| A" | 0 | - 0,001 |
| B" | 0,66 | - 0,001 |
| C" | 0,85 | - 0,001 |
| D" | 0,93 | - 0,001 |
| E" | 1 | - 0,015 |

wobei die Linien, die diese Punkte verbinden, um die Grenze A"B"C"D"E" zu bilden, folgendermaßen verlaufen:

|  | x | Zv/R |
|---|---|---|
| A"B" | (r-Ra")/(Rb"-Ra") | - 0,001 |
| B"C" | (r-Rb")/(Rc"-Rb") | - 0,001 |
| C"D" | (r-Rc")/(Rd"-Rc") | - 0,001 |
| D"E" | (r-Rd")/(Re"-Rd") | - 0,001 - 0,014$x^2$ |

wobei Ra", Rb", Rc", Rd" und Re" die jeweilige Position von A", B", C", D" und E" längs des Blattes darstellen, und

   - einer oberen Grenze F"G"H"I"J" dergestalt, dass die Koordinaten der Punkte F", G", H", I" und J" die folgenden sind:

|  | r/R | Zv/R |
|---|---|---|
| F" | 0 | + 0,001 |
| G" | 0,66 | + 0,001 |

(fortgesetzt)

|  | r/R | Zv/R |
|---|---|---|
| H" | 0,85 | + 0,001 |
| I" | 0,97 | + 0,001 |
| J" | 1 | - 0,005 |

wobei die Linien, die diese Punkte verbinden, um die Grenze F"G"H"I"J" zu bilden, folgendermaßen verlaufen:

|  | x | Zv/R |
|---|---|---|
| F"G" | (r-Rf")/(Rg"-Rf") | + 0,001 |
| G"H" | (r-Rg")/(Rh"-Rg") | + 0,001 |
| H"I" | (r-Rh")/(Ri"-Rh") | + 0,001 |
| I"J" | (r-Ri")/(Rj"-Ri") | $+ 0,001 - 0,006x^2$ |

wobei Rf", Rg", Rh", Ri" und Rj" die jeweilige Position von F", G", H", I" und J" längs des Blattes darstellen.

8. Blatt nach Anspruch 7,
**dadurch gekennzeichnet, dass** zwischen den Grenzen der unteren A"B"C"D"E" und der oberen F"G"H"I"J" eine bevorzugte Kurve aus den Punkten P", Q", R", S" und T" gebildet wird, deren Koordinaten die folgenden sind:

|  | r/R | Zv/R |
|---|---|---|
| P" | 0,20223 | 0 |
| Q" | 0,66 | 0 |
| R" | 0,85 | 0 |
| S" | 0,95 | 0 |
| T" | 1 | -0,009050 |

wobei die Linien, die diese Punkte verbinden, um die Kurve P"Q"R"S"T" zu bilden, folgendermaßen verlaufen:

|  | x | Zv/R |
|---|---|---|
| P"Q" | (r-Rp")/(Rq"-Rp") | 0 |
| Q"R" | (r-Rq")/(Rr"-Rq") | 0 |
| R"S" | (r-Rr")/(Rs"-Rr") | 0 |
| S"T" | (r-Rs")/(Rt"-Rs") | $- 0,009050x^2$ |

wobei Rp", Rq", Rr", Rs" und Rt" die jeweilige Position von P", Q", R", S" und T" längs des Blattes darstellen.

9. Blatt nach einem der Ansprüche 1 bis 8,
**dadurch gekennzeichnet, dass** das Entwicklungsgesetz der relativen Dicke der Querschnitte, e/L, liegt zwischen:

- einer unteren Grenze UVW dergestalt, dass die Koordinaten der Punkte U, V und W die folgenden sind:

|  | r/R | e/L |
|---|---|---|
| U | 0 | 0,14 |
| V | 0,4 | 0,14 |

**EP 0 842 846 B1**

(fortgesetzt)

|   | r/R | e/L |
|---|-----|-----|
| W | 1 | 0,06 |

wobei die Linien, die diese Punkte verbinden, um die Grenze UVW zu bilden, folgendermaßen verlaufen:

|    | x | e/L |
|----|---|-----|
| UV | (r-Ru)/(Rv-Ru) | 0,14 |
| VW | (r-Rv)/(Rw-Rv) | 0,14 - 0,08x |

wobei Ru, Rv und Rw die jeweilige Position von U, V und W längs des Blattes darstellen, und

- einer oberen Grenze XYZ dergestalt, dass die Koordinaten der Punkte X, Y und Z die folgenden sind:

|   | r/R | e/L |
|---|-----|-----|
| X | 0 | 0,16 |
| Y | 0,4 | 0,16 |
| Z | 1 | 0,08 |

wobei die Linien, die diese Punkte verbinden, um die Grenze XYZ zu bilden, folgendermaßen verlaufen:

|    | x | e/L |
|----|---|-----|
| XY | (r-Rx)/(Ry-Rx) | 0,16 |
| YZ | (r-Ry)/(Rz-Ry) | 0,16 - 0,08x |

wobei Rx, Ry und Rz die jeweilige Position von X, Y und Z längs des Blattes darstellen.

10. Blatt nach Anspruch 9,
**dadurch gekennzeichnet, dass** zwischen den Grenzen der unteren UVW und der oberen XYZ eine bevorzugte Kurve aus den Punkten K, L und M gebildet wird, deren Koordinaten die folgenden sind:

|   | r/R | e/L |
|---|-----|-----|
| K | 0,20223 | 0,15 |
| L | 0,4 | 0,15 |
| M | 1 | 0,07 |

wobei die Linien, die diese Punkte verbinden, um die Grenze KLM zu bilden, folgendermaßen verlaufen:

|    | x | e/L |
|----|---|-----|
| KL | (r-Rk)/(Rl-Rk) | 0,15 |
| LM | (r-Rl)/(Rm-Rl) | 0,15 - 0,08x |

wobei Rk, Rl und Rm die jeweilige Position von K, L und M längs des Blattes darstellen.

## Claims

1. A blade with a swept-back tip for the rotary wings of an aircraft, which blade is intended to form part of a rotor whose hub (2) is connected to said blade (2), which can be rotated about the axis of said hub, said blade (1) having a leading edge (5) and a trailing edge (6), and being formed of successive elemental cross sections (7) identified by the distance $\underline{r}$ separating each of them from the axis of rotation of the said hub and each having a defined chord profile and a center of pressure whose offset from the pitch-change axis, orthogonal to each of said sections, determines the sweep of said blade,

**characterized in that**, said blade (1) subdividing along its longitudinal length into four regions, namely a first region extending from the inboard edge of the blade R0 to a first section R1 situated at approximately 66% of the distance along the total length of the blade, measured from the axis of rotation of the hub, a second region extending from the first section R1 to a second section R2 situated at approximatley 85% of the distance along the total length of the blade, a third region extending from the second section R2 to a third section R3 situated between 93% and 97% of the distance along the total length of the blade, and a fourth region extending from the third section R3 to the free outboard edge R of the blade, the chord length L increases generally linearly in said first region, is at its maximum and constant in said second region, decreases linearly in said third region, and decreases according to a parabolic function in said fourth region, satisfying the conditions of continuity of the rate of chord variation at the boundary where this region meets the third region, and the offset Y'f of the center of pressure from the pitch-change axis in said first region is positive in the direction of the leading edge and increases in proportion to the distance $\underline{r}$, is at its maximum and constant in said second region, decreases linearly and becomes negative in said third region, so that the sweep angle $\Lambda$ keeps a constant value approximately equal to 25° backward, and decreases according to a parabolic function in said fourth region, satisfying the condition of continuity of the sweep angle $\Lambda$ at the boundary where this regions meets the third region.

2. The blade as claimed in claim 1,
   **characterized in that** the law governing the change in chord length lies between:

   - a lower limit ABCDE such that the coordinates of the points A, B, C, D and E are as follows:

| | r/R | L/$\bar{L}$ |
|---|---|---|
| A | 0 | 0.55 |
| B | 0.66 | 1.1 |
| C | 0.85 | 1.1 |
| D | 0.93 | 0.73 |
| E | 1 | 0.25 |

   the lines joining these points to form the limit ABCDE being such that:

| | x | L/$\bar{L}$ |
|---|---|---|
| AB | (r-Ra)/(Rb-Ra) | 0.55 + 0.55x |
| BC | (r-Rb)/(Rc-Rb) | 1.1 |
| CD | (r-Rc)/(Rd-Rc) | 1.1 - 0.37x |
| DE | (r-Rd)/(Re-Rd) | $0.73 - 0.32375x - 0.15625x^2$ |

   with Ra, Rb, Rc, Rd and Re representing the respective positions of A, B, C, D and E along the blade, and
   - an upper limit FGHIJ, such that the coordinates of the points F, G, H, I and J are as follows:

| | r/R | L/$\bar{L}$ |
|---|---|---|
| F | 0 | 0.65 |
| G | 0.66 | 1.2 |
| H | 0.85 | 1.2 |
| I | 0.97 | 0.83 |
| J | 1 | 0.45 |

the lines joining these points to form the limit FGHIJ being such that:

| | | x | L/$\bar{L}$ |
|---|---|---|---|
| | FG | (r-Rf)/(Rg-Rf) | 0.65 + 0.55x |
| | GH | (r-Rg)/(Rh-Rg) | 1.2 |
| | HI | (r-Rh)/(Ri-Rh) | 1.2 - 0.37x |
| | IJ | (r-Ri)/(Rj-Ri) | 0.83 - 0.0925x - 0.2875x$^2$ |

with Rf, Rg, Rh, Ri and Rj representing the respective positions of F, G, H, I and J along the blade.

3. The blade as claimed in claim 2,
   **characterized in that**, between the lower limit ABCDE and the upper limit FGHIJ, a preferred curve is formed by the points P, Q, R, S and T whose coordinates are as follows:

| | r/R | L/$\bar{L}$ |
|---|---|---|
| P | 0.20223 | 0.7784 |
| Q | 0.66 | 1.168864 |
| R | 0.85 | 1.168864 |
| S | 0.95 | 0.779222 |
| T | 1 | 0.351538 |

the lines joining these points to form the curve PQRST being such that:

| | | x | L/$\bar{L}$ |
|---|---|---|---|
| | PQ | (r-Rp)/(Rq-Rp) | 0.778400 + 0.390464x |
| | QR | (r-Rq)/(Rr-Rq) | 1.168864 |
| | RS | (r-Rr)/(Rs-Rr) | 1.168864 - 0.389642x |
| | ST | (r-Rs)/(Rt-Rs) | 0.779222 - 0.194821x - 0.232863x$^2$ |

with Rp, Rq, Rr, Rs and Rt representing the respective positions of P, Q, R, S and T along the blade.

4. The blade as claimed in any one of claims 1 to 3,
   **characterized in that** the law governing the change in offset of the center of pressure lies between:

   - a lower limit A'B'C'D'E' such that the coordinates of the points A', B', C', D' and E' are as follows:

| | r/R | Y'f/R |
|---|---|---|
| A' | 0 | 0 |
| B' | 0.66 | + 0.005 |
| C' | 0.85 | + 0.005 |
| D' | 0.93 | - 0.053 |
| E' | 1 | - 0.105 |

the lines joining these points to form the limit A'B'C'D'E' being such that:

| | | x | Y'f/R |
|---|---|---|---|
| | A'B' | (r-Ra')/(Rb'-Ra') | + 0.005x |

(continued)

|  | x | Y'f/R |
|---|---|---|
| B'C' | (r-Rb')/(Rc'-Rb') | + 0.005 |
| C'D' | (r-Rc')/(Rd'-Rc') | + 0.005 - 0.058x |
| D'E' | (r-Rd')/(Re'-Rd') | - 0.053 - 0.05075x - 0.00125$x^2$ |

with Ra', Rb', Rc', Rd' and Re' representing the respective positions of A', B', C', D' and E' along the blade, and

- an upper limit F'G'H'I'J', such that the coordinates of the points F', G', H', I' and J' are as follows:

|  | r/R | Y'f/R |
|---|---|---|
| F' | 0 | 0 |
| G' | 0.66 | + 0.030 |
| H' | 0.85 | + 0.030 |
| I' | 0.97 | - 0.013 |
| J' | 1 | - 0.050 |

the lines joining these points to form the limit F'G'H'I'J' being such that:

|  | x | Y'f/R |
|---|---|---|
| F'G' | (r-Rf')/(Rg'-Rf') | + 0.03x |
| G'H' | (r-Rg')/(Rh'-Rg') | + 0.03 |
| H'I' | (r-Rh')/(Ri'-Rh') | + 0.03 - 0.043x |
| I'J' | (r-Ri')/(Rj'-Ri') | - 0.013 - 0.01075x - 0.02625$x^2$ |

with Rf', Rg', Rh', Ri' and Rj' representing the respective positions of F', G', H', I' and J' along the blade.

5. The blade as claimed in claim 4,
   **characterized in that**, between the lower limit A'B'C'D'E' and the upper limit F'G'H'I'J', a preferred curve is formed by the points P', Q', R', S' and T' whose coordinates are as follows:

|  | r/R | Y'f/R |
|---|---|---|
| P' | 0.20223 | + 0.003396 |
| Q' | 0.66 | + 0.011083 |
| R' | 0.85 | + 0.011083 |
| S' | 0.95 | - 0.035547 |
| T' | 1 | - 0.072113 |

the lines joining these points to form the curve P'Q'R'S'T' being such that:

|  | x | Y'f/R |
|---|---|---|
| P'Q' | (r-Rp')/(Rq'-Rp') | + 0.003396 + 0.007687x |
| Q'R' | (r-Rq')/(Rr'-Rq') | + 0.011083 |
| R'S' | (r-Rr')/(Rs'-Rr') | + 0.011083 - 0.046630x |
| S'T' | (r-Rs')/(Rt'-Rs') | - 0.035547 - 0.023315x - 0.013251$x^2$ |

with Rp', Rq', Rr', Rs' and Rt' representing the respective positions of P', Q', R', S' and T' along the blade.

6. The blade as claimed in any one of claims 1 to 5,
   **characterized in that** the parameters of the laws governing variations along said longitudinal length and for each of said regions, on the one hand in the chord length L of each section with respect to the mean chord $\bar{L}$, and on the other hand in the offset Y'f of the center of pressure of each section from the pitch-change axis, ensure that the overall center of pressure of said blade is positioned more or less on said pitch-change axis.

7. The blade as claimed in any one of claims 1 to 6,
   **characterized in that** the law governing the change in the vertical shift of the center of pressure Zv/R lies between:

   - a lower limit A"B"C"D"E" such that the coordinates of the points A", B", C", D" and E" are as follows:

|     | r/R  | Zv/R    |
|-----|------|---------|
| A"  | 0    | - 0.001 |
| B"  | 0.66 | - 0.001 |
| C"  | 0.85 | - 0.001 |
| D"  | 0.93 | - 0.001 |
| E"  | 1    | - 0.015 |

   the lines joining these points to form the limit A"B"C"D"E" being such that:

|       | x                   | Zv/R                |
|-------|---------------------|---------------------|
| A"B"  | (r-Ra")/(Rb"-Ra")   | - 0.001             |
| B"C"  | (r-Rb")/(Rc"-Rb")   | - 0.001             |
| C"D"  | (r-Rc")/(Rd"-Rc")   | - 0.001             |
| D"E"  | (r-Rd")/(Re"-Rd")   | $- 0.001 - 0.014x^2$ |

   with Ra", Rb", Rc", Rd" and Re" representing the respective positions of A", B", C", D" and E" along the blade, and

   - an upper limit F"G"H"I"J", such that the coordinates of the points F", G", H", I" and J" are as follows:

|     | r/R  | Zv/R    |
|-----|------|---------|
| F"  | 0    | + 0.001 |
| G"  | 0.66 | + 0.001 |
| H"  | 0.85 | + 0.001 |
| I"  | 0.97 | + 0.001 |
| J"  | 1    | - 0.005 |

   the lines joining these points to form the limit F"G"H"I"J" being such that:

|       | x                   | Zv/R                |
|-------|---------------------|---------------------|
| F"G"  | (r-Rf")/(Rg"-Rf")   | + 0.001             |
| G"H"  | (r-Rg")/(Rh"-Rg")   | + 0.001             |
| H"I"  | (r-Rh")/(Ri"-Rh")   | + 0.001             |
| I"J"  | (r-Ri")/(Rj"-Ri")   | $+ 0.001 - 0.006x^2$ |

   with Rf", Rg", Rh", Ri" and Rj" representing the respective positions of F", G", H", I" and J" along the blade.

8. The blade as claimed in claim 7,

**characterized in that**, between the lower limit A"B"C"D"E" and the upper limit F"G"H"I"J", a preferred curve is formed by the points P", Q", R", S" and T" whose coordinates are as follows:

|  | r/R | Zv/R |
|---|---|---|
| P" | 0.20223 | 0 |
| Q" | 0.66 | 0 |
| R" | 0.85 | 0 |
| S" | 0.95 | 0 |
| T" | 1 | - 0.009050 |

the lines joining these points to form the curve P"Q"R"S"T" being such that:

|  | x | Zv/R |
|---|---|---|
| P-Q" | (r-Rp")/(Rq"-Rp") | 0 |
| Q"R" | (r-Rq")/(Rr"-Rq") | 0 |
| R"S" | (r-Rr")/(Rs"-Rr") | 0 |
| S"T" | (r-Rs")/(Rt"-Rs") | $- 0.00905x^2$ |

with Rp", Rq", Rr", Rs" and Rt" representing the respective positions of P", Q", R", S" and T" along the blade.

9. The blade as claimed in any one of claims 1 to 8,
**characterized in that** the law governing the change in relative thickness of the sections e/L lies between:

- a lower limit UVW, such that the coordinates of the points U, V and W are as follows:

|  | r/R | e/L |
|---|---|---|
| U | 0 | 0.14 |
| V | 0.4 | 0.14 |
| W | 1 | 0.06 |

the lines joining these points to form the limit UVW being such that:

|  | x | e/L |
|---|---|---|
| UV | (r-Ru)/(Rv-Ru) | 0.14 |
| VW | (r-Rv)/(Rw-Rv) | 0.14 - 0.08x |

with Ru, Rv and Rw representing the respective positions of U, V and W along the blade, and
- an upper limit XYZ, such that the coordinates of the points X, Y and Z are as follows:

|  | r/R | e/L |
|---|---|---|
| X | 0 | 0.16 |
| Y | 0.4 | 0.16 |
| Z | 1 | 0.08 |

the lines joining these points to form the limit XYZ being such that:

|  | x | e/L |
|---|---|---|
| XY | (r-Rx)/(Ry-Rx) | 0.16 |

(continued)

|  | x | e/L |
|---|---|---|
| YZ | (r-Ry)/(Rz-Ry) | 0.16 - 0.08x |

with Rx, Ry and Rz representing the respective positions of X, Y and Z along the blade.

10. The blade as claimed in claim 9,
**characterized in that**, between the lower limit UVW and the upper limit XYZ, a preferred curve is formed by the points K, L and M whose coordinates are as follows:

|  | r/R | e/L |
|---|---|---|
| K | 0.20223 | 0.15 |
| L | 0.4 | 0.15 |
| M | 1 | 0.07 |

the lines joining these points to form the limit KLM being such that:

|  | x | e/L |
|---|---|---|
| KL | (r-Rk)/(Rl-Rk) | 0.15 |
| LM | (r-Rl)/(Rm-Rl) | 0.15 - 0.08x |

with Rk, Rl and Rm representing the respective positions of K, L and M along the blade.

FIG.1

FIG.2

# FIG. 3

# FIG.4

FIG.5

FIG.6

EP 0 842 846 B1